(19) Europäisches Patentamt / European Patent Office / Office européen des brevets

(11) **EP 4 117 282 A1**

(12) **EUROPEAN PATENT APPLICATION**
published in accordance with Art. 153(4) EPC

(43) Date of publication:
**11.01.2023 Bulletin 2023/02**

(21) Application number: **20923253.7**

(22) Date of filing: **06.03.2020**

(51) International Patent Classification (IPC):
**H04N 9/07** $^{(2006.01)}$     **H04N 5/225** $^{(2006.01)}$

(52) Cooperative Patent Classification (CPC):
**H04N 5/225; H04N 9/07**

(86) International application number:
**PCT/CN2020/078212**

(87) International publication number:
**WO 2021/174529 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **NUMATA, Hajime**
  **Yokohama, Kanagawa 220--0012 (JP)**
• **AOYAMA, Chiaki**
  **Yokohama, Kanagawa 220--0012 (JP)**

(74) Representative: **Thorniley, Peter et al
Venner Shipley LLP
200 Aldersgate
London EC1A 4HD (GB)**

(54) **IMAGE SENSOR, IMAGING APPARATUS, ELECTRONIC DEVICE, IMAGE PROCESSING SYSTEM AND SIGNAL PROCESSING METHOD**

(57)      The present disclosure provides an image sensor (10), an imaging apparatus (100), an electronic device (1000), an image processing system (10000), and a signal processing method. The image sensor (10) includes a filter array (11), a pixel array (12), and a processing circuit (13). The filter array includes a plurality of filter regions (111) each including a plurality of filter units (1111). The processing circuit (13) is configured to: combine the electrical signals generated by the pixels (120) corresponding to each filter unit (1111) for outputting as a combined luminance value and forming a first intermediate image; generate a first color signal, a second color signal, and a third color signal based on the electrical signals generated by the pixels (120) corresponding to each filter region (111); and process the first color signal, the second color signal, and the third color signal to obtain a plurality of second intermediate images representing chrominance values of the filter region (111), and fuse the first intermediate image and the second intermediate images to obtain a first target image.

FIG. 3

**Description**

**CROSS-REFERENCE TO RELATED APPLICATIONS**

The present application is a continuation of International Application No. PCT/CN2020/078212 filed on March 06, 2020, which is hereby incorporated by reference in its entirety.

**TECHNICAL FIELD**

The present disclosure relates to the field of imaging technologies, and more particularly, to an image sensor, an imaging apparatus, an electronic device, an image processing system, and a signal processing method.

**BACKGROUND**

Electronic devices such as mobile phones are typically equipped with cameras to provide photographing functions. An image sensor is provided in a camera. In order to capture color images, an image sensor is typically provided with a filter array arranged in a form of a Bayer array, such that a plurality of pixels in the image sensor can receive light passing through the corresponding filters, thereby generating pixel signals with different color channels. Image sensors have poor light sensitivity in low-luminance environments, making it difficult to obtain high-definition images.

**SUMMARY**

The present disclosure provides an image sensor, an imaging apparatus, an electronic device, an image processing system, and a signal processing method.

An image sensor according to an embodiment of the present disclosure includes a filter array, a pixel array, and a processing circuit. The filter array includes a plurality of filter regions each including a plurality of filter units. Each filter unit includes at least one first color filter, at least one second color filter, and at least one third color filter. The pixel array includes a plurality of pixels each corresponding to one filter in the filter array and configured to receive light passing through the corresponding filter to generate an electrical signal. The processing circuit is provided on a substrate having the pixel array and configured to: combine the electrical signals generated by the pixels corresponding to each filter unit for outputting as a combined luminance value and forming a first intermediate image, the combined luminance value representing luminance of light applied to the pixels corresponding to the filter unit; generate a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and process the first color signal, the second color signal, and the third color signal to obtain a plurality of second intermediate images representing chrominance values of the filter region, and fuse the first intermediate image and the plurality of second intermediate images to obtain a first target image.

An imaging apparatus according to an embodiment of the present disclosure includes an image sensor and a processor. The image sensor includes a filter array and a pixel array. The filter array includes a plurality of filter regions each including a plurality of filter units. Each filter unit includes at least one first color filter, at least one second color filter, and at least one third color filter. The pixel array includes a plurality of pixels each corresponding to one filter in the filter array and configured to receive light passing through the corresponding filter to generate an electrical signal. The electrical signals generated by the pixels corresponding to each filter unit are combined for outputting as a combined luminance value and forming a first intermediate image. The combined luminance value represents luminance of light applied to the pixels corresponding to the filter unit. The processor is configured to: generate a first color signal, a second color signal, and a third color signal based on the electrical signals generated by the pixels corresponding to each filter region, the first color signal representing a value in a first color channel of the light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and process the first color signal, the second color signal, and the third color signal to obtain a plurality of second intermediate images representing chrominance values of the filter region, and fuse the first intermediate image and the plurality of second intermediate images to obtain a first target image.

An electronic device according to an embodiment of the present disclosure includes an imaging apparatus and a processor. The imaging apparatus includes an image sensor. The image sensor includes a filter array and a pixel array. The filter array includes a plurality of filter regions each including a plurality of filter units. Each filter unit includes at least one first color filter, at least one second color filter, and at least one third color filter. The pixel array includes a plurality of pixels each corresponding to one filter in the filter array and configured to receive light passing through the corresponding filter to generate an electrical signal. The electrical signals generated by the pixels corresponding to each filter unit are combined for outputting as a combined luminance value and forming a first intermediate image. The combined luminance value represents luminance of light applied to the pixels corresponding to the filter unit. The processor is configured to: generate a first color signal, a second color signal, and a third color signal based on the electrical signals generated by the pixels corresponding to each filter region, the first color signal representing a value in a first color channel of the light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and process the first color signal, the second color signal, and the third color signal to obtain a plurality of second intermediate images representing chrominance values of the filter region, and fuse the first intermediate image and the plurality of second intermediate images to obtain a first target image.

An image processing system according to an embodiment of the present disclosure includes an electronic device and a processor. The electronic device includes an imaging apparatus. The imaging apparatus includes an image sensor. The image sensor includes a filter array and a pixel array. The filter array includes a plurality of filter regions each including a plurality of filter units. Each filter unit includes at least one first color filter, at least one second color filter, and at least one third color filter. The pixel array includes a plurality of pixels each corresponding to one filter in the filter array and configured to receive light passing through the corresponding filter to generate an electrical signal. The electrical signals generated by the pixels corresponding to each filter unit are combined for outputting as a combined luminance value and forming a first intermediate image. The combined luminance value represents luminance of light applied to the pixels corresponding to the filter unit. The processor is configured to: generate a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and process the first color signal, the second color signal, and the third color signal to obtain a plurality of second intermediate images representing chrominance values of the filter region, and fuse the first intermediate image and the plurality of second intermediate images to obtain a first target image.

A signal processing method according to an embodiment of the present disclosure is applied in an image sensor. The imaging apparatus includes a filter array and a pixel array. The filter array includes a plurality of filter regions each including a plurality of filter units. Each filter unit includes at least one first color filter, at least one second color filter, and at least one third color filter. The pixel array includes a plurality of pixels each corresponding to one filter in the filter array and configured to receive light passing through the corresponding filter to generate an electrical signal. The signal processing method includes: combining the electrical signals generated by the pixels corresponding to each filter unit for outputting as a combined luminance value and forming a first intermediate image, the combined luminance value representing luminance of light applied to the pixels corresponding to the filter unit; and generating a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; processing the first color signal, the second color signal, and the third color signal to obtain a plurality of second intermediate images representing chrominance values of the filter region; and fusing the first intermediate image and the plurality of second intermediate images to obtain a first target image.

Additional aspects and advantages of the embodiments of the present disclosure will be given at least in part in the following description, or become apparent at least in part from the following description, or can be learned from practicing of the present disclosure.

## BRIEF DESCRIPTION OF DRAWINGS

The above and/or additional aspects and advantages of the present disclosure will become more apparent and more understandable from the following description of embodiments taken in conjunction with the accompanying drawings, in which:

FIGS. 1 and 2 are schematic diagrams each illustrating an image sensor according to some embodiments of the present disclosure;
FIGS. 3 and 4 are schematic diagrams each illustrating an arrangement of some filters in a filter array according to some embodiments of the present disclosure;

FIG. 5 is a schematic diagram illustrating an image sensor according to some embodiments of the present disclosure;

FIGS. 6 to 8 are schematic diagrams each illustrating an arrangement of some filters in a filter array according to some embodiments of the present disclosure;

FIGS. 9 to 11 are schematic diagrams each illustrating operation principles of an image sensor according to some embodiments of the present disclosure;

FIG. 12 is a schematic diagram illustrating operation principles of an image sensor including a filter array arranged in the form of a Bayer array in the related art;

FIGS. 13 to 15 are schematic diagrams each illustrating an arrangement of some filters in a filter array according to some embodiments of the present disclosure;

FIG. 16 to 19 are schematic diagrams each illustrating operation principles of an image sensor according to some embodiments of the present disclosure;

FIG. 20 is a schematic diagram illustrating a part of a structure of a processing circuit according to some embodiments of the present disclosure;

FIG. 21 is a schematic diagram of an imaging apparatus according to some embodiments of the present disclosure;

FIG. 22 is a schematic diagram of an electronic device according to some embodiments of the present disclosure;

FIG. 23 is a schematic diagram of an image processing system according to some embodiments of the present disclosure;

FIG. 24 is a flowchart illustrating a signal processing method according to some embodiments of the present disclosure; and

FIG. 25 is a schematic diagram of an image processing circuit in a computer device according to some embodiments of the present disclosure.

## DESCRIPTION OF EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

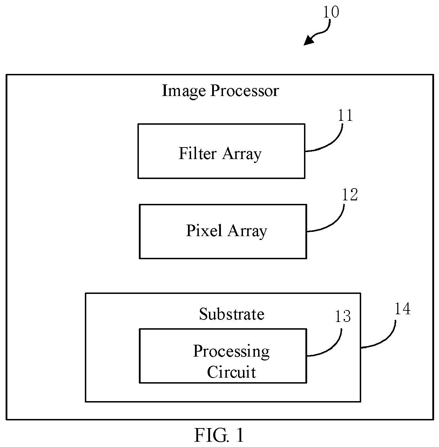

Referring to FIG. 1 to FIG. 3, the present disclosure provides an image sensor 10. The image sensor 10 includes a filter array 11, a pixel array 12, and a processing circuit 13. The filter array 11 includes a plurality of filter regions 111 each including a plurality of filter units 1111. Each filter unit 1111 includes at least one first color filter A, at least one second color filter B, and at least one third color filter C. The pixel array 12 includes a plurality of pixels 120 each corresponding to one filter 110 in the filter array 11 and configured to receive light passing through the corresponding filter 110 to generate an electrical signal. The processing circuit 13 is provided on a substrate 14 having the pixel array 12 and configured to combine the electrical signals generated by the pixels 120 corresponding to each filter unit 1111 for outputting as a combined luminance value and forming a first intermediate image. The combined luminance value represents luminance of light applied to the pixels 120 corresponding to the filter unit 1111. The processing circuit 13 is further configured to generate a first color signal, a second color signal, and a third color signal based on the electrical signals generated by the pixels 120 corresponding to each filter region 111. The first color signal represents a value in a first color channel of light applied to the pixels 120 corresponding to the filter region 111, the second color signal represents a value in a second color channel of the light applied to the pixels 120 corresponding to the filter region 111, and the third color signal represents a value in a third color channel of the light applied to the pixels 120 corresponding to the filter region 111. The processing circuit 13 is further configured to process the first color signal, the second color signal, and the third color signal to obtain a plurality of second intermediate images representing chrominance values of the filter region 111, and fuse the first intermediate image and the plurality of second intermediate images to obtain a first target image.

In the image sensor 10 according to the embodiment of the present disclosure, since the combined luminance value is a combined output of the electrical signals from all the pixels 120 corresponding to each filter unit 1111, the combined output of the electrical signals from the pixels 120 is equivalent to increasing the photosensitive area of the pixels, such that the photosensitive capability of the pixels can be improved. Therefore, the obtained combined luminance value is more accurate, and the first target image formed by using the combined luminance value is also more accurate. In addition, since the color signals (the first color signal, the second color signal, and the third color signal) are generated by the pixels 120 corresponding to the filter region 111, the color signals in the present disclosure are also more accurate than color signals generated by one single pixel 120 (especially in a low-luminance environment),

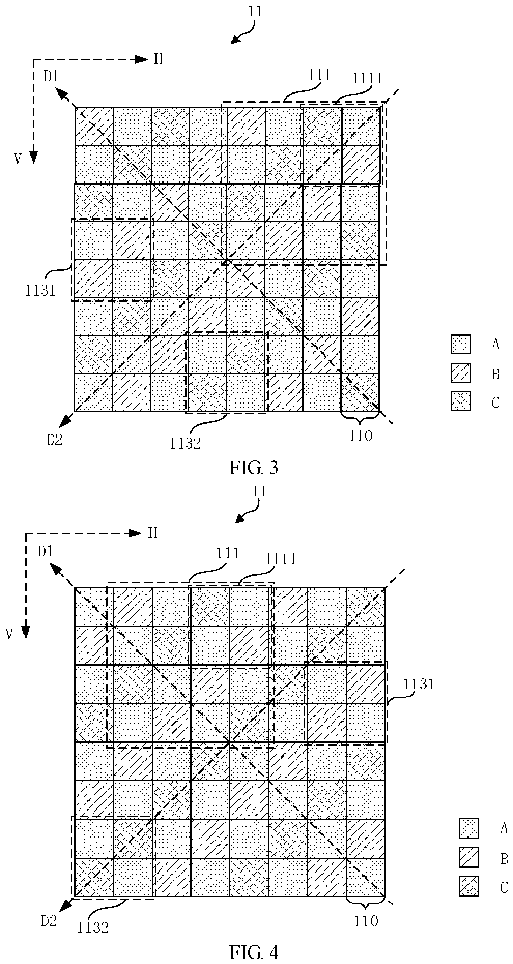

Referring to FIG. 3 again, the number of filter units 1111 in each filter region 111 may be M*M, where M is an integer greater than or equal to 2. For example, the value of M may be 2, 3, 4, 5, 6, 7, 8, 9, 10, 15, 20, etc., and the present disclosure is not limited to any of these examples. When M is relatively large, the first color signal, the second color signal, and the third color signal corresponding to the filter region 111 will be more accurate. When M is relatively small, the image that can be acquired by the filter array 11 of a same size will have a higher resolution. The number of filters 110 in each filter unit 1111 may be N*N, where N is an integer greater than or equal to 2. For example, the value of N may be 2, 3, 4, 5, 6, 7, 8, 9, 10, 15, 20, etc., and the present disclosure is not limited to any of these examples. When N is relatively large, the combined luminance value corresponding to the filter unit 1111 will be higher. When N is relatively small, the image that can be acquired by the filter array 11 of a same size will have a higher resolution. M and N may be the same or different. For example, the number of filter units 1111 in each filter region 111 may be 2*2, and the number of filters 110 in each filter unit 1111 may be 2*2. In this case, the first color signal, the second color signal, the third color signal, and the combined luminance value are all relatively accurate, and the resolution of the image is relatively high. Of course, the number of filter units 1111 in each filter region 111 may be 3*3, or 4*4, etc., and the number of filters 110 in each filter unit 1111 may be 3*3 or 4*4, etc.

In the image sensor 10 according to the embodiment of the present disclosure, the plurality of filter units 1111 may have a same ratio between the number of first color filters A, the number of second color filters B, and the number of the third color filters C in each filter unit 1111. For example, the ratio between the number of first color filters A, the number of second color filters B, and the number of third color filters C in each filter unit 1111 may be 2:1:1. In another example, the ratio between the number of the first color filter A, the number of the second color filter B, and the number of the third color filter C in each filter unit 1111 may be 5:2:2.

In the embodiment of the present disclosure, each first color filter A may be a green filter G, each second color filter B may be a red filter R, and each third color filter C may be a blue filter Bu. In the example where the ratio between the number of first color filters A, the number of second color filters B, and the number of third color filters C in each filter unit 1111 is 2:1:1, the ratio between the number of green filters G, the number of red filters R, and the number of blue filters Bu in each filter unit 1111 is 2:1:1. That is, the combined luminance value is R+2G+B, which is similar to the calculation of the luminance signal (y=0.299R+0.586G+0.114B), the combined luminance value obtained in this case is more accurate.

In some embodiments, the filter array 11 may include a plurality of first sets of filters 1131 and a plurality of second sets of filters 1132. Each of the plurality of first sets of filters 1131 may include a plurality of first color filters A and a plurality of second color filters B, and a number of first color filters A and a number of second color filters B are same in each of the plurality of first sets of filters 1131. Each of the plurality of second sets of filters 1132 may include a plurality of first color filters A and a plurality of third color filters C, and a number of first color filters A and a number of third color filters C are same in each of the plurality of second sets of filters 1132. A sub-array formed by arrangement of all the first sets of filters 1131 and all the second sets of filters 1132 is a part of the filter array 11, or a sub-array formed by arrangement of all the filter regions 111 is a part of the filter array 11. In a low-luminance mode, the image sensor 10 may be configured to obtain the first target image. In a clear texture mode, the processing circuit 13 may be configured to combine the electrical signals generated by the pixels 120 corresponding to each of the plurality of first sets of filters 1131 to generate a first pixel signal and a third pixel signal. The first pixel signal represents a value in the first color channel of light applied to the pixels 120 corresponding to the first set of filters 1131, and the third pixel signal represents a value in the second color channel of the light applied to the pixels 120 corresponding to the first set of filters 1131. The processing circuit 13 may be further configured to combine the electrical signals generated by the pixels 120 corresponding to each of the plurality of second sets of filters 1132 to generate a second pixel signal and a fourth pixel signal. The second pixel signal represents a value in the first color channel of the light applied to the pixels 120 corresponding to the second set of filters 1132, and the fourth pixel signal represents a value in a third color channel of light applied to the pixels 120 corresponding to the second set of filters 1132. The processing circuit 13 may be further configured to obtain a second target image based on the first pixel signal, the second pixel signal, the third pixel signal, and the fourth pixel signal.

In some embodiments, if the filter array 11 is manufactured in units of filter regions 111, all the first sets of filters 1131 and all the second sets of filters 1132 are arranged to form a sub-array which is a part of the filter array 11. When acquiring the first target image, the electrical signals generated by all the pixels 120 are read. When acquiring the second target image, the electrical signals generated by the pixels 120 in the first row and/or the first column are not read. Taking the filter array 11 of FIG. 3 as an example, when acquiring the second target image, the electrical signals generated by the pixels 120 in the first row and the last row are not read, or the electrical signals generated by the pixels 120 in the first and last columns are not read.

For example, in the example where the ratio between the number of first color filters A, the number of second color filters B, and the number of third color filters C in each filter unit 1111 is 2:1:1, one first color filter A and one second color filter B in one filter unit 1111 and one first color filter A and one first color filter B in another filter unit 1111 are combined into a first set of filters 1131. One first color filter A and one third color filter C in one filter unit 1111 and one first color filter A and one third color filter C in another filter unit 1111 are combined into a second set of filters 1132.

In some embodiments, if the filter array 11 is manufactured in units of first sets of filters 1131 and second sets of filters 1132, all the filter regions 111 are arranged to form a sub-array which is a part of the filter array 11. When acquiring the first target image, the electrical signals generated by the pixels 120 in the first row and/or the first column are not read. When acquiring the second target image, the electrical signals generated by all the pixels 120 are read. Taking the filter array 11 of FIG. 4 as an example, when acquiring the first target image, the electrical signals generated by the pixels 120 in the first row and the last three rows are not read, or the electrical signals generated by the pixels 120 in the first column and the last three columns are not read.

In an embodiment of the present disclosure, the user can switch the mode by selecting his/her desired mode. For example, the display interface may display the low-luminance mode and the clear texture mode. When the user selects the low-luminance mode, the first target image is outputted, or when the user selects the clear texture mode, the second target image is outputted. In this way, the switching between the low-luminance mode and the clear texture mode can be achieved respectively with the same filter array 11. In the low-luminance mode, since the combined luminance value is outputted by combining the electrical signals of all the pixels 120 corresponding to each filter unit 1111, and the color signal is generated by the pixels 120 corresponding to the filter region 111, the low-luminance mode can still be used to acquire images accurately and effectively in a low-luminance environment. That is, the low-luminance mode can be applied in the low-luminance environment. In the clear texture mode, since both the first set of filters 1131 and the second set of filters 1132 have the first color filter A, both the pixels 120 corresponding to the first set of filters 1131 and the pixels 120 corresponding to the second set of filters 1132 are capable of generating pixel signals having values in the first color channel. Therefore, in the process of generating the second target image, no interpolation is needed for the values in the first color channel, and the color reproduction of the color image can be more accurate.

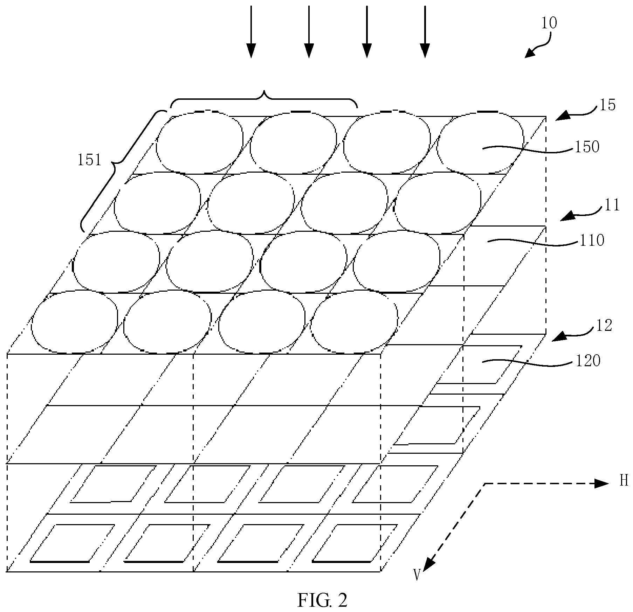

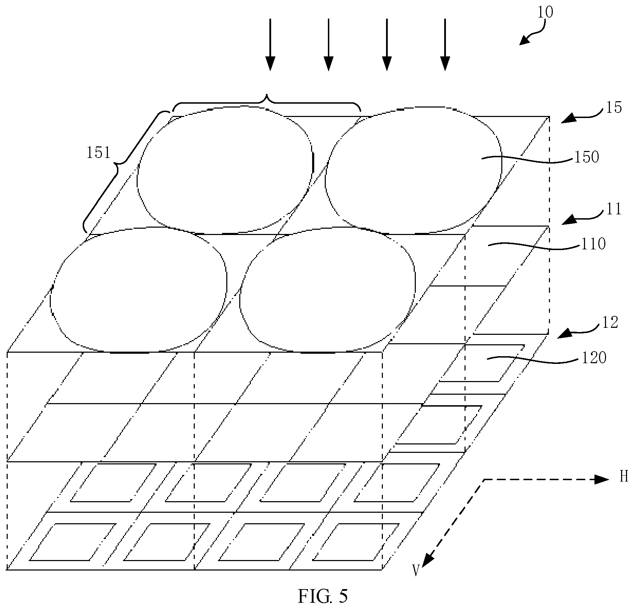

Referring to FIG. 2 and FIG. 5, the image sensor 10 according to the embodiment of the present disclosure includes a microlens array 15, a filter array 11, and a pixel array 12. The microlens array 15, the filter array 11, and the pixel array 12 are arranged in sequence in a light-receiving direction of the image sensor 10.

The filter array 11 includes a plurality of first sets of filters 1131 and a plurality of second sets of filters 1132. Each of the plurality of first sets of filters 1131 includes a plurality of first color filters A and a plurality of second color filters B. A number of first color filters A and a number of second color filters A are same in each of the plurality of first sets of filters 111. Each of the plurality of second sets of filters 1132 includes a plurality of first color filters A and a plurality of third color filters C. A number of first color filters A and a number of third color filters C are same in each of the plurality of second sets of filters 112.

The pixel array 12 includes a plurality of pixels 120 each corresponding to one filter 110 in the filter array 11 and configured to receive light passing through the corresponding filter 110 to generate an electrical signal.

The microlens array 15 includes a plurality of sets of microlenses 151. Each set of microlenses 151 in the microlens array 15 corresponds to one set of filters 113 (the first set of filters 1131 or the second set of filters 1132), and to the pixels 120 corresponding to the one set of filters 113. As illustrated in FIG. 2, each set of microlenses 151 includes a plurality of microlenses 150 each corresponding to one filter 110 and one pixel 120. As illustrated in FIG. 5, each set of microlenses 151 includes one microlens 150 corresponding to one set of filters 113 and to the pixels 120 corresponding to the one set of filters 113.

FIGS. 3 and 6 to 8 are schematic diagrams each illustrating an arrangement of some filters 110 in the filter array 11 according to the embodiments of the present disclosure. In the filter arrays 11 illustrated in FIGS. 4 and 6 to 8, each filter array 11 includes a plurality of first sets of filters 1131 and a plurality of second sets of filters 1132. Each of the plurality of first sets of filters 111 includes a plurality of first color filters A and a plurality of second color filters B. A number of first color filters A and a number of second color filters B are same in each of the plurality of first sets of filters 1131. Each of the plurality of second sets of filters 1132 includes a plurality of first color filters A and a plurality of third color filters C. A number of first color filters A and a number of third color filters C are same in each of the plurality of second sets of filters 1132.

Here, each first color filter A can be a green filter G, each second color filter B can be a red filter R, and each third color filter C can be a blue filter Bu.

Here, the plurality of first sets of filters 1131 may be arranged in a first diagonal direction D1, and the plurality of second sets of filters 1132 may be arranged in a second diagonal direction D2 different from the first diagonal direction D1. In an example, when the plurality of first sets of filters 1131 is arranged in the first diagonal direction D1 and the plurality of second sets of filters 1132 is arranged in the second diagonal direction D2, the first sets of filters 1131 and the second sets of filters 1132 may be arranged adjacently to each other in a vertical direction and a horizontal direction of the image sensor 10.

Here, the number of filters 110 in each of the plurality of first sets of filters 1131 is K*K, and the number of filters 110 in each of the plurality of second sets of filters 1132 is K*K, where K is an integer greater than or equal to 2. For example, the value of K may be 2, 3, 4, 5, 6, 7, 8, 9, 10, 15, 20, etc., and the present disclosure is not limited to any of these values.

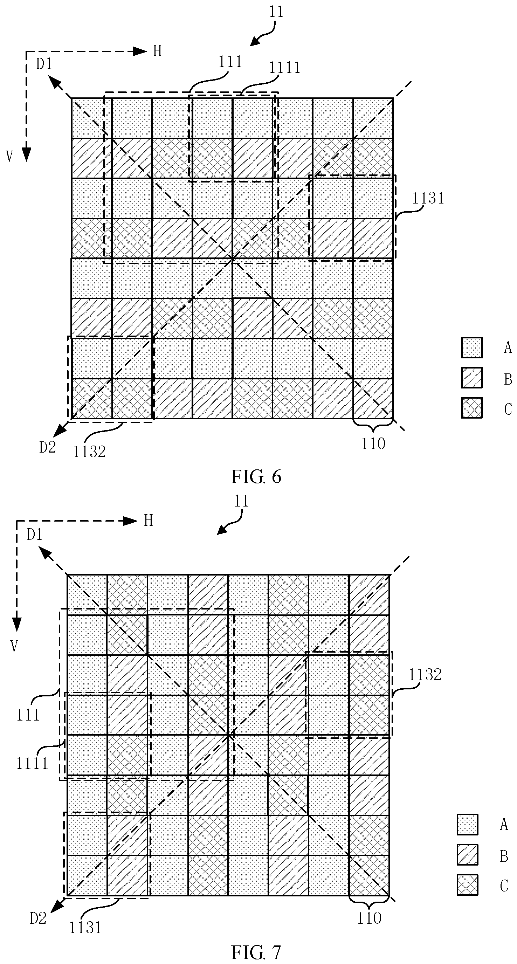

Here, the arrangement of the filters 110 in each first set of filters 1131 may be: (1) referring to FIG. 4, the plurality of first color filters A and the plurality of second color filters B are arranged adjacently to each other in the vertical direction and the horizontal direction of the image sensor 10; (2) referring to FIG. 6, the filters 110 are arranged in rows, and the filters 110 in each row have a same color; (3) referring to FIG. 7, the filters 110 are arranged in columns, and the filters 110 in each column have a same color. Of course, the arrangement of the filters 110 in each first set of filters 1131 is not limited to any of these examples.

Here, the arrangement of the filters 110 in each second set of filters 1132 may be: (1) referring to FIG. 4, the plurality of first color filters A and the plurality of third color filters C are arranged adjacently to each other in the vertical direction and the horizontal direction of the image sensor 10; (2) referring to FIG. 6, the filters 110 are arranged in rows, and the filters 110 in each row have a same color; (3) referring to FIG. 7, the filters 110 are arranged in columns, and the filters 110 in each column have a same color. Of course, the arrangement of the filters 110 in each second set of filters 1132 is not limited to any of these examples.

FIG. 4 is a schematic diagram illustrating an arrangement of some filters 110 in the filter array 11 according to an embodiment of the present disclosure. Referring to FIG. 4, the arrangement of some filters 110 is:

```
A       B       A       C
B       A       C       A
A       C       A       B
C       A       B       A
```

Here, A denotes a first color filter, B denotes a second color filter, and C denotes a third color filter. The number of filters 110 in each first set of filters 1131 is 2*2, and the number of filters 110 in each second set of filters 1132 is 2*2.

As illustrated in FIG. 4, the plurality of first sets of filters 1131 is arranged in the first diagonal direction D1 (for example, a direction connecting an upper left corner and a lower right corner of the filter array 11 in FIG. 4), and the plurality of second sets of filters 1132 is arranged in the second diagonal direction D2 (for example, a direction connecting a lower left corner and an upper right corner of the filter array 11 in FIG. 4). The first diagonal direction D1 is different from the second diagonal direction D2. For example, the first diagonal direction D1 may be perpendicular to the second diagonal direction D2.

It is to be noted that the first diagonal direction D1 and the second diagonal direction D2 are not limited to diagonals, but may also include directions parallel to the diagonals. The term "direction" here is not a single pointing direction, but can be understood as a concept of a "straight line" indicating an arrangement and having two pointing directions at both ends of the straight line. In addition, in other embodiments, the first diagonal direction D1 may alternatively be the direction connecting the lower left corner and the upper right corner of the filter array 11, and the second diagonal direction D2 may alternatively be the direction connecting the upper left corner and the lower right corner of the filter array 11. In this case, positions of the first sets of filters 1131 and the second sets of filters 1132 are changed correspondingly to a change in the diagonal directions.

As illustrated in FIG. 4, the first sets of filters 1131 and the second sets of filters 1132 are arranged adjacently to each other in the vertical direction V of the image sensor 10 (illustrated in FIG. 2), and also arranged adjacently to each other in the horizontal direction H. That is, the plurality of sets of filters 113 is arranged periodically in the order of a first set of filters 1131 and a second set of filters 1132 in the vertical direction V, and the plurality of sets of filters 113 is arranged periodically in the order of a first set of filters 1131 and a second set of filters 1132 in the horizontal direction H.

It is to be noted that the arrangement in which the first sets of filters 1131 and the second sets of filters 1132 are arranged adjacently to each other in the vertical direction V and adjacently to each other in the horizontal direction H is not limited to the one illustrated in FIG. 4. Alternatively, the plurality of sets of filters 113 may be arranged periodically in the order of a first set of filters 1131 and a second set of filters 1132 or the order of a second set of filters 1132 and a first set of filters 1131 in the vertical direction V (from left to right and from top to bottom, the same below), and the plurality of sets of filters 113 may be arranged periodically in the order of a first set of filters 1131 and a second set of filters 1132 or the order of a second set of filters 1132 and a first set of filters 1131 in the horizontal direction H (from left to right and from top to bottom, the same below).

As illustrated in FIG. 4, in each first set of filters 1131, the plurality of first color filters A and the plurality of second color filters B are arranged adjacently to each other in the vertical direction V and the horizontal direction H. That is, in the vertical direction V, the first color filters A and the second color filters B are arranged alternately, and in the horizontal direction H, the first color filters A and the second color filters B are arranged alternately. In each second set of filters 1132, the plurality of first color filters A and the plurality of third color filters C are arranged adjacently to each other in the vertical direction V and the horizontal direction H. That is, in the vertical direction V, the first color filters A and the third color filters C are arranged alternately, and in the horizontal direction H, the first color filters A and the third color filters C are arranged alternately.

In the filter array 11 shown in FIG. 4, if the filters 110 in the first row or the first column are omitted, the arrangement of the filters 110 may be:

| | | | |
|---|---|---|---|
| B | A | C | A |
| A | C | A | B |
| C | A | B | A |
| A | B | A | C |

In this case, each filter region 111 may include 2*2 filter units 1111, and each filter unit 1111 includes 2*2 filters 110. Each filter unit 1111 includes two first color filters A, one second color filter B, and one third color filter C.

In some embodiments, the arrangement of some filters 110 in the filter array 11 may alternatively be:

| | | | | | |
|---|---|---|---|---|---|
| A | B | A | A | C | A |
| B | A | B | C | A | C |
| A | B | A | A | C | A |
| A | C | A | A | B | A |
| C | A | C | B | A | B |
| A | C | A | A | B | A |

Here, A denotes a first color filter, B denotes a second color filter, and C denotes a third color filter. The number of filters 110 in each first set of filters 1131 is 3*3, and the number of filters 110 in each second set of filters 1132 is 3*3.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the plurality of first color filters A and the plurality of second color filters B are arranged adjacently to each other in the vertical direction V and the horizontal direction H. That is, in the vertical direction V, the first color filters A and the second color filters B are arranged alternately, and in the horizontal direction H, the first color filters A and the second color filters B are arranged alternately. In each second set of filters 1132, the plurality of first color filters A and the plurality of third color filters C are arranged adjacently to each other in the vertical direction V and the horizontal direction H. That is, in the vertical direction V, the first color filters A and the third color filters C are arranged alternately, and in the horizontal direction H, the first color filters A and the third color filters C are arranged alternately.

In the above filter array 11, if the filters 110 in the first row are omitted, the arrangement of the filters 110 may be:

| | | | | | |
|---|---|---|---|---|---|
| B | A | B | C | A | C |
| A | B | A | A | C | A |
| A | C | A | A | B | A |
| C | A | C | B | A | B |
| A | C | A | A | B | A |
| A | B | A | A | C | A |

In this case, each filter region 111 may include 2*2 filter units 1111, and each filter unit 1111 includes 3*3 filters 110. Some filter units 1111 may include five first color filters A, three second color filters B, and one third color filter C. Some filter units 1111 may include five first color filters A, one second color filter B, and three third color filters C.

If the filters 110 in the first column are omitted, the arrangement of the filters 110 may be:

| | | | | | |
|---|---|---|---|---|---|
| B | A | A | C | A | A |

(continued)

```
A    B    C    A    C    B
B    A    A    C    A    A
C    A    A    B    A    A
A    C    B    A    B    C
C    A    A    B    A    A
```

In this case, each filter region 111 may include 2*2 filter units 1111, and each filter unit 1111 includes 3*3 filters 110. Some filter units 1111 may include five first color filters A, three second color filters B, and one third color filter C. Some filter units 1111 may include five first color filters A, one second color filter B, and three third color filters C.

In some embodiments, the arrangement of some filters 110 in the filter array 11 may alternatively be:

```
A    B    A    B    A    C    A    C
B    A    B    A    C    A    C    A
A    B    A    B    A    C    A    C
B    A    B    A    C    A    C    A
A    C    A    C    A    B    A    B
C    A    C    A    B    A    B    A
A    C    A    C    A    B    A    B
C    A    C    A    B    A    B    A
```

Here, A denotes a first color filter, B denotes a second color filter, and C denotes a third color filter. The number of filters 110 in each first set of filters 1131 is 4*4, and the number of filters 110 in each second set of filters 1132 is 4*4.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the plurality of first color filters A and the plurality of second color filters B are arranged adjacently to each other in the vertical direction V and the horizontal direction H. That is, in the vertical direction V, the first color filters A and the second color filters B are arranged alternately, and in the horizontal direction H, the first color filters A and the second color filters B are arranged alternately. In each second set of filters 1132, the plurality of first color filters A and the plurality of third color filters C are arranged adjacently to each other in the vertical direction V and the horizontal direction H. That is, in the vertical direction V, the first color filters A and the third color filters C are arranged alternately, and in the horizontal direction H, the first color filters A and the third color filters C are arranged alternately.

In the above filter array 11, if the filters 110 in the first row are omitted, the arrangement of the filters 110 may be:

```
B    A    B    A    C    A    C    A
A    B    A    B    A    C    A    C
B    A    B    A    C    A    C    A
A    C    A    C    A    B    A    B
C    A    C    A    B    A    B    A
A    C    A    C    A    B    A    B
C    A    C    A    B    A    B    A
A    B    A    B    A    C    A    C
```

In this case, each filter region 111 may include 2*2 filter units 1111, and each filter unit 1111 includes 4*4 filters 110. Some filter units 1111 may include eight first color filters A, six second color filters B, and two third color filters C. Some filter units 1111 may include eight first color filters A, two second color filters B, and six third color filters C.

If the filters 110 in the first column are omitted, the arrangement of the filters 110 may be:

```
B   A   B   A   C   A   C   A
A   B   A   C   A   C   A   B
B   A   B   A   C   A   C   A
A   B   A   C   A   C   A   B
C   A   C   A   B   A   B   A
A   C   A   B   A   B   A   C
C   A   C   A   B   A   B   A
A   C   A   B   A   B   A   C
```

In this case, each filter region 111 may include 2*2 filter units 1111, and each filter unit 1111 includes 4*4 filters 110. Some filter units 1111 may include eight first color filters A, six second color filters B, and two third color filters C. Some filter units 1111 may include eight first color filters A, two second color filters B, and six third color filters C.

FIG. 6 is a schematic diagram illustrating an arrangement of some filters 110 in the filter array 11 according to another embodiment of the present disclosure. Referring to FIG. 6, the arrangement of some filters 110 is:

```
A       A       A       A
B       B       C       C
A       A       A       A
C       C       B       B
```

Here, A denotes a first color filter, B denotes a second color filter, and C denotes a third color filter. The number of filters 110 in each first set of filters 1131 is 2*2, and the number of filters 110 in each second set of filters 1132 is 2*2.

As illustrated in FIG. 6, the plurality of first sets of filters 1131 is arranged in the first diagonal direction D1 (for example, the direction connecting the upper left corner and the lower right corner of the filter array 11 in FIG. 6), and the plurality of second sets of filters 1132 is arranged in the second diagonal direction D2 (for example, the direction connecting the lower left corner and the upper right corner of the filter array 11 in FIG. 6). The first diagonal direction D1 is different from the second diagonal direction D2. For example, the first diagonal direction D1 may be perpendicular to the second diagonal direction D2.

As illustrated in FIG. 6, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

As illustrated in FIG. 6, in each first set of filters 1131, the filters 110 are arranged in rows, and the filters 110 in each row have a same color. For example, the filters 110 in the first row are all first color filters A, and the filters 110 in the second row are all second color filters B. In each second set of filters 1132, the filters 110 are arranged in rows, and the filters 110 in each row have a same color. For example, the filters 110 in the first row are all first color filters A, and the filters 110 in the second row are all third color filters C.

In the filter array 11 shown in FIG. 6, if the filters 110 in the first column are omitted, the arrangement of the filters 110 may be:

```
A       A       A       A
B       C       C       B
A       A       A       A
C       B       B       C
```

In this case, each filter region 111 may include 2*2 filter units 1111, and each filter unit 1111 includes 2*2 filters 110. Each filter unit 1111 includes two first color filters A, one second color filter B, and one third color filter C.

In some embodiments, the arrangement of some filters 110 in the filter array 11 may alternatively be:

```
A    A    A    A    A    A
B    B    B    C    C    C
A    A    A    A    A    A
A    A    A    A    A    A
C    C    C    B    B    B
A    A    A    A    A    A
```

Here, A denotes a first color filter, B denotes a second color filter, and C denotes a third color filter. The number of filters 110 in each first set of filters 1131 is 3*3, and the number of filters 110 in each second set of filters 1132 is 3*3.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the filters 110 are arranged in rows, and the filters 110 in each row have a same color. For example, the filters 110 in the first row are all first color filters A, the filters 110 in the second row are all second color filters B, and the filters 110 in the third row are all first color filters A. In each second set of filters 1132, the filters 110 are arranged in rows, and the filters 110 in each row have a same color. For example, the filters 110 in the first row are all first color filters A, the filters 110 in the second row are all third color filters C, and the filters 110 in the third row are all first color filters A.

In the above filter array 11, if the filters 110 in the first column are omitted, the arrangement of the filters 110 may be:

```
A    A    A    A    A    A
B    B    C    C    C    B
A    A    A    A    A    A
A    A    A    A    A    A
C    C    B    B    B    C
A    A    A    A    A    A
```

In this case, each filter region 111 may include 2*2 filter units 1111, and each filter unit 1111 includes 3*3 filters 110. Some filter units 1111 may include five first color filters A, three second color filters B, and one third color filter C. Some filter units 1111 may include five first color filters A, one second color filter B, and three third color filters C.

In some embodiments, the arrangement of some filters 110 in the filter array 11 may alternatively be:

```
A    A    A    A    A    A    A    A
B    B    B    B    C    C    C    C
A    A    A    A    A    A    A    A
B    B    B    B    C    C    C    C
A    A    A    A    A    A    A    A
C    C    C    C    B    B    B    B
A    A    A    A    A    A    A    A
C    C    C    C    C    B    B    B
```

Here, A denotes a first color filter, B denotes a second color filter, and C denotes a third color filter. The number of filters 110 in each first set of filters 1131 is 4*4, and the number of filters 110 in each second set of filters 1132 is 4*4.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the filters 110 are arranged in rows, and the filters 110 in each row have a same color. For example, the filters 110 in the first row are all first color filters A, the filters 110 in the second row are all second color filters B, the filters 110 in the third row are all first color filters A, and the filters 110 in the fourth row are all second color filters B. In each second set of filters 1132, the filters 110 are arranged in rows, and the filters 110 in each row have a same color. For example, the filters 110 in the first row are all first color filters A, the filters 110 in the second row are all third color filters C, the filters 110 in the third row are all first color filters A, and the filters 110 in the fourth row are all third color filters C.

In the above filter array 11, if the filters 110 in the first column are omitted, the arrangement of the filters 110 may be:

```
A   A   A   A   A   A   A   A
B   B   B   C   C   C   C   B
A   A   A   A   A   A   A   A
B   B   B   C   C   C   C   B
A   A   A   A   A   A   A   A
C   C   C   B   B   B   B   C
A   A   A   A   A   A   A   A
C   C   C   B   B   B   B   C
```

In this case, each filter region 111 may include 2*2 filter units 1111, and each filter unit 1111 includes 4*4 filters 110. Some filter units 1111 may include eight first color filters A, six second color filters B, and two third color filters C. Some filter units 1111 may include eight first color filters A, two second color filters B, and six third color filters C.

FIG. 7 is a schematic diagram illustrating an arrangement of some filters 110 in the filter array 11 according to another embodiment of the present disclosure. Referring to FIG. 7, the arrangement of some filters 110 is:

```
A       B       A       C
A       B       A       C
A       C       A       B
A       C       A       B
```

Here, A denotes a first color filter, B denotes a second color filter, and C denotes a third color filter. The number of filters 110 in each first set of filters 1131 is 2*2, and the number of filters 110 in each second set of filters 1132 is 2*2.

As illustrated in FIG. 7, the plurality of first sets of filters 1131 is arranged in the first diagonal direction D1 (for example, the direction connecting the upper left corner and the lower right corner of the filter array 11 in FIG. 7), and the plurality of second sets of filters 1132 is arranged in the second diagonal direction D2 (for example, the direction connecting the lower left corner and the upper right corner of the filter array 11 in FIG. 7). The first diagonal direction D1 is different from the second diagonal direction D2. For example, the first diagonal direction D1 may be perpendicular to the second diagonal direction D2.

As illustrated in FIG. 7, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

As illustrated in FIG. 7, in each first set of filters 1131, the filters 110 are arranged in columns, and the filters 110 in each column have a same color. For example, the filters 110 in the first column are all first color filters A, and the filters 110 in the second column are all second color filters B. In each second set of filters 1132, the filters 110 are arranged in columns, and the filters 110 in each column have a same color. For example, the filters 110 in the first column are all first color filters A, and the filters 110 in the second column are all third color filters C.

In the filter array 11 shown in FIG. 7, if the filters 110 in the first column are omitted, the arrangement of the filters 110 may be:

```
A        B        A        C
A        C        A        B
A        C        A        B
A        B        A        C
```

In this case, each filter region 111 may include 2*2 filter units 1111, and each filter unit 1111 includes 2*2 filters 110. Each filter unit 1111 includes two first color filters A, one second color filter B, and one third color filter C.

In some embodiments, the arrangement of some filters 110 in the filter array 11 may alternatively be:

```
A        B        A        A        C        A
A        B        A        A        C        A
A        B        A        A        C        A
A        C        A        A        B        A
A        C        A        A        B        A
A        C        A        A        B        A
```

Here, A denotes a first color filter, B denotes a second color filter, and C denotes a third color filter. The number of filters 110 in each first set of filters 1131 is 3*3, and the number of filters 110 in each second set of filters 1132 is 3*3.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the filters 110 are arranged in columns, and the filters 110 in each column have a same color. For example, the filters 110 in the first column are all first color filters A, the filters 110 in the second column are all second color filters B, and the filters 110 in the third column are all first color filters A. In each second set of filters 1132, the filters 110 are arranged in columns, and the filters 110 in each column have a same color. For example, the filters 110 in the first column are all first color filters A, the filters 110 in the second column are all third color filters C, and the filters 110 in the third column are all first color filters A.

In the above filter array 11, if the filters 110 in the first row are omitted, the arrangement of the filters 110 may be:

```
A        B        A        A        C        A
A        B        A        A        C        A
A        C        A        A        B        A
A        C        A        A        B        A
```

(continued)

```
A    C    A    A    B    A
A    B    A    A    C    A
```

In this case, each filter region 111 may include 2*2 filter units 1111, and each filter unit 1111 includes 3*3 filters 110. Some filter units 1111 may include five first color filters A, three second color filters B, and one third color filter C. Some filter units 1111 may include five first color filters A, one second color filter B, and three third color filters C.

In some embodiments, the arrangement of some filters 110 in the filter array 11 may alternatively be:

```
A    B    A    B    A    C    A    C
A    B    A    B    A    C    A    C
A    B    A    B    A    C    A    C
A    B    A    B    A    C    A    C
A    C    A    C    A    B    A    B
A    C    A    C    A    B    A    B
A    C    A    C    A    B    A    B
A    C    A    C    A    B    A    B
```

Here, A denotes a first color filter, B denotes a second color filter, and C denotes a third color filter. The number of filters 110 in each first set of filters 1131 is 4*4, and the number of filters 110 in each second set of filters 1132 is 4*4.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the filters 110 are arranged in columns, and the filters 110 in each column have a same color. For example, the filters 110 in the first column are all first color filters A, the filters 110 in the second column are all second color filters B, the filters 110 in the third column are all first color filters A, and the filters 110 in the fourth column are all second color filters B. In each second set of filters 1132, the filters 110 are arranged in columns, and the filters 110 in each column have a same color. For example, the filters 110 in the first column are all first color filters A, the filters 110 in the second column are all third color filters C, the filters 110 in the third column are all first color filters A, and the filters 110 in the fourth column are all third color filters C.

In the above filter array 11, if the filters 110 in the first row are omitted, the arrangement of the filters 110 may be:

```
A    B    A    B    A    C    A    C
A    B    A    B    A    C    A    C
A    B    A    B    A    C    A    C
A    C    A    C    A    B    A    B
A    C    A    C    A    B    A    B
A    C    A    C    A    B    A    B
A    C    A    C    A    B    A    B
A    B    A    B    A    C    A    C
```

In this case, each filter region 111 may include 2*2 filter units 1111, and each filter unit 1111 includes 4*4 filters 110. Some filter units 1111 may include eight first color filters A, six second color filters B, and two third color filters C. Some filter units 1111 may include eight first color filters A, two second color filters B, and six third color filters C.

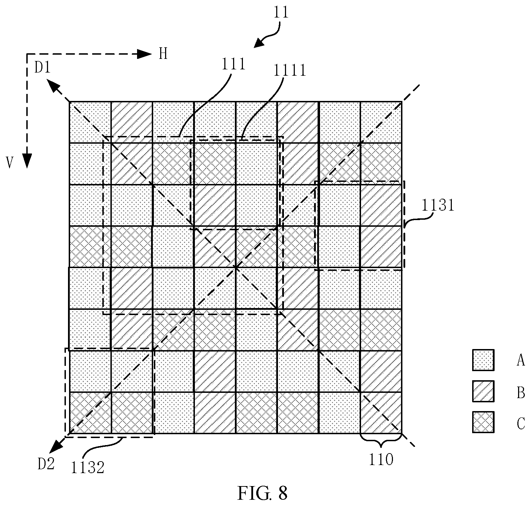

FIG. 8 is a schematic diagram illustrating an arrangement of some filters 110 in the filter array 11 according to another embodiment of the present disclosure. Referring to FIG. 8, the arrangement of some filters 110 is:

```
A       B       A       A
A       B       C       C
A       A       A       B
C       C       A       B
```

Here, A denotes a first color filter, B denotes a second color filter, and C denotes a third color filter. The number of filters 110 in each first set of filters 1131 is 2*2, and the number of filters 110 in each second set of filters 1132 is 2*2.

As illustrated in FIG. 8, the plurality of first sets of filters 1131 is arranged in the first diagonal direction D1 (for example, the direction connecting the upper left corner and the lower right corner of the filter array 11 in FIG. 8), and the plurality of second sets of filters 1132 is arranged in the second diagonal direction D2 (for example, the direction connecting the lower left corner and the upper right corner of the filter array 11 in FIG. 8). The first diagonal direction D1 is different from the second diagonal direction D2. For example, the first diagonal direction D1 may be perpendicular to the second diagonal direction D2.

As illustrated in FIG. 8, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

As illustrated in FIG. 8, in each first set of filters 1131, the filters 110 are arranged in columns, and the filters 110 in each column have a same color. For example, the filters 110 in the first column are all first color filters A, and the filters 110 in the second column are all second color filters B. In each second set of filters 1132, the filters 110 are arranged in rows, and the filters 110 in each row have a same color. For example, the filters 110 in the first row are all first color filters A, and the filters 110 in the second row are all third color filters C.

In the filter array 11 shown in FIG. 8, if the filters 110 in the first row and the first column are omitted, the arrangement of the filters 110 may be:

```
C       A       B       A
A       B       A       C
B       A       C       A
A       C       A       B
```

In this case, each filter region 111 may include 2*2 filter units 1111, and each filter unit 1111 includes 2*2 filters 110. Each filter unit 1111 includes two first color filters A, one second color filter B, and one third color filter C.

In some embodiments, the arrangement of some filters 110 in the filter array 11 may alternatively be:

```
A       A       A       A       C       A
B       B       B       A       C       A
A       A       A       A       C       A
A       C       A       A       A       A
A       C       A       B       B       B
A       C       A       A       A       A
```

Here, A denotes a first color filter, B denotes a second color filter, and C denotes a third color filter. The number of filters 110 in each first set of filters 1131 is 3*3, and the number of filters 110 in each second set of filters 1132 is 3*3.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the filters 110 are arranged in rows, and the filters 110 in each row have a same color. For example, the filters 110 in the first row are all first color filters A, the filters 110 in the second row are all second color filters B, and the filters 110 in the third row are all first color filters A. In each second set of filters 1132, the filters 110 are arranged in columns, and the filters 110 in each column have a same color. For example, the filters 110 in the first column are all first color filters A, the filters 110 in the second column are all third color filters C, and the filters 110 in the third column are all first color filters A.

In the above filter array 11, if the filters 110 in the first row and the first column are omitted, the arrangement of the filters 110 may be:

```
B   B   A   C   A   B
A   A   A   C   A   A
C   A   A   A   A   A
C   A   B   B   B   A
C   A   A   A   A   A
A   A   A   C   A   A
```

In this case, each filter region 111 may include 2*2 filter units 1111, and each filter unit 1111 includes 3*3 filters 110. Some filter units 1111 may include five first color filters A, three second color filters B, and one third color filter C. Some filter units 1111 may include five first color filters A, one second color filter B, and three third color filters C.

In some embodiments, the arrangement of some filters 110 in the filter array 11 may alternatively be:

```
A   B   A   B   A   A   A   A
A   B   A   B   C   C   C   C
A   B   A   B   A   A   A   A
A   B   A   B   C   C   C   C
A   A   A   A   A   B   A   B
C   C   C   C   A   B   A   B
A   A   A   A   A   B   A   B
C   C   C   C   A   B   A   B
```

Here, A denotes a first color filter, B denotes a second color filter, and C denotes a third color filter. The number of filters 110 in each first set of filters 1131 is 4*4, and the number of filters 110 in each second set of filters 1132 is 4*4.

In this arrangement, the plurality of first sets of filters 1131 is arranged in the first diagonal direction D1 (for example, the direction connecting the upper left corner and the lower right corner of the filter array 11), and the plurality of second sets of filters 1132 is arranged in the second diagonal direction D2 (for example, the direction connecting the lower left corner and the upper right corner of the filter array 11). The first diagonal direction D1 is different from the second diagonal direction D2. For example, the first diagonal direction D1 may be perpendicular to the second diagonal direction D2.

In this arrangement, the first sets of filters 1131 and the second sets of filters 1132 are arranged adjacently to each other in the vertical direction V of the image sensor 10 (illustrated in FIG. 2), and are arranged adjacently to each other in the horizontal direction H. That is, the plurality of sets of filters 113 is arranged periodically in the order of a first set of filters 1131 and a second set of filters 1132 or in the order of a second set of filters 1132 and a first set of filters 1131 in the vertical direction V, and the plurality of sets of filters 113 is arranged periodically in the order of a first set of filters 1131 and a second set of filters 1132 or in the order of a second set of filters 1132 and a first set of filters 1131 in the horizontal direction H.

In this arrangement, in each first set of filters 1131, the filters 110 are arranged in columns, and the filters 110 in each column have a same color. For example, the filters 110 in the first column are all first color filters A, the filters 110 in the second column are all second color filters B, the filters 110 in the third column are all first color filters A, and the filters 110 in the fourth column are all second color filters B. In each second set of filters 1132, the filters 110 are arranged in rows, and the filters 110 in each row have a same color. For example, the filters 110 in the first row are all first color filters A, the filters 110 in the second row are all third color filters C, the filters 110 in the third row are all first color filters A, and the filters 110 in the fourth row are all third color filters C.

In the above filter array 11, if the filters 110 in the first row and the first column are omitted, the arrangement of the filters 110 may be:

```
B  A  B  C  C  C  C  A
B  A  B  A  A  A  A  A
B  A  B  C  C  C  C  A
A  A  A  A  B  A  B  A
C  C  C  A  B  A  B  C
A  A  A  A  B  A  B  A
C  C  C  A  B  A  B  C
B  A  B  A  A  A  A  A
```

In this case, each filter region 111 may include 2*2 filter units 1111, and each filter unit 1111 includes 4*4 filters 110. Some filter units 1111 may include eight first color filters A, six second color filters B, and two third color filters C. Some filter units 1111 may include eight first color filters A, two second color filters B, and six third color filters C.

Referring to FIG. 1 to FIG. 8, in the image sensor 10 according to the embodiments of the present disclosure, the electrical signals generated by the pixels 120 corresponding to each first set of filters 1131 can be combined to generate the first pixel signal and the third pixel signal. The electrical signals generated by the pixels 120 corresponding to each second set of filters 1132 can be combined to generate the second pixel signal and the fourth pixel signal.

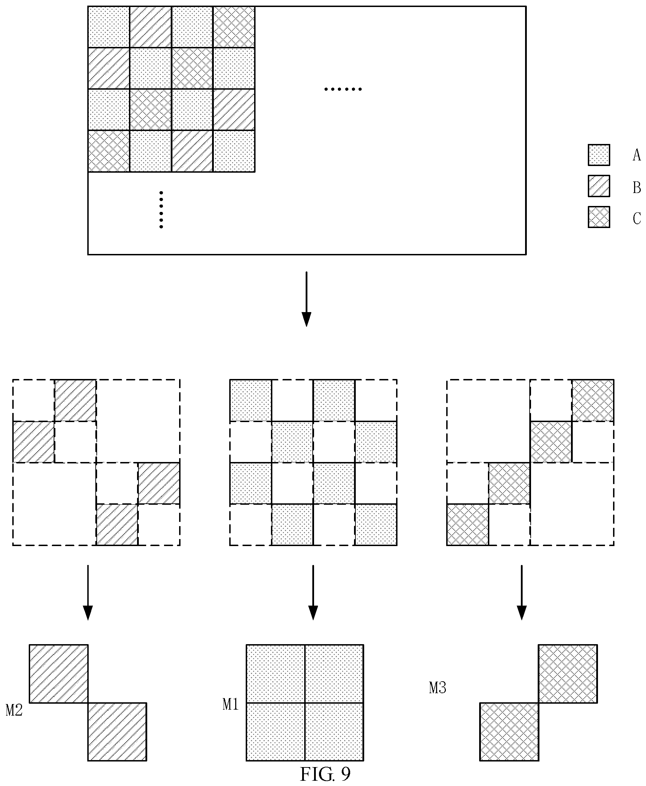

In the example illustrated in FIG. 4, each set of filters 113 includes 2*2 filters 110, and each set of filters 113 corresponds to four pixels 120. Referring to FIG. 2, FIG. 4, and FIG. 9, among the four pixels 120 corresponding to the first set of filters 1131, two pixels 120 can receive light passing through the first color filters A to generate two electrical signals, and the other two pixels 120 can receive light passing through the second color filters B to generate two electrical signals. The image sensor 10 can combine the electrical signals generated by the two pixels 120 that receive the light passing through the first color filters A to obtain the first pixel signal, and combine the electrical signals generated by the two pixels 120 that receive the light passing through the second color filters B to obtain the third pixel signal. Here, the first pixel signal represents the value in the first color channel of the light applied to the pixels 120 corresponding to the first set of filters 1131, and the third pixel signal represents the value in the second color channel of the light applied to the pixels 120 corresponding to the first set of filters 1131. Among the four pixels 120 corresponding to the second set of filters 1132, the two pixels 120 can receive the light passing through the first color filters A to generate two electrical signals, and the other two pixels 120 can receive light passing through the third color filters C to generate two electrical signals. The image sensor 10 can combine the electrical signals generated by the two pixels 120 that receive the light passing through the first color filters A to obtain the second pixel signal, and combine the electrical signals generated by the two pixels 120 that receive the light passing through the third color filters C to obtain the fourth pixel signal. Here, the second pixel signal represents the value in the first color channel of the light applied to the pixels 120 corresponding to the second set of filters 1132, and the fourth pixel signal represents the value in the third color channel of the light applied to the pixels 120 corresponding to the second set of filters 1132.

Thus, the four pixels 120 corresponding to each first set of filters 1131 can form a first combined pixel, and each first combined pixel can generate a first pixel signal and a third pixel signal. The four pixels 120 corresponding to each second set of filters 1132 can form a second combined pixel, and each second combined pixel can generate a second pixel signal and a fourth pixel signal. Each combined pixel can output the pixel signal (the first pixel signal or the second pixel signal) having a value in the first color channel, only some of the combined pixels can output the third pixel signal having a value in the second color channel and only some of the combined pixels can output the fourth pixel signal having a value in the third color channel. Therefore, a combined pixel that cannot output the third pixel signal needs to be subjected to an interpolation process to calculate a value in the second color channel of the combined pixel, and a combined pixel that cannot output the fourth pixel signal also needs to be subjected to the interpolation process to calculate a value in the third color channel of the combined pixel. In this way, each combined pixel can obtain the values in the first color channel, the second color channel, and the third color channel, and a color image can be generated by means of color space calculation.

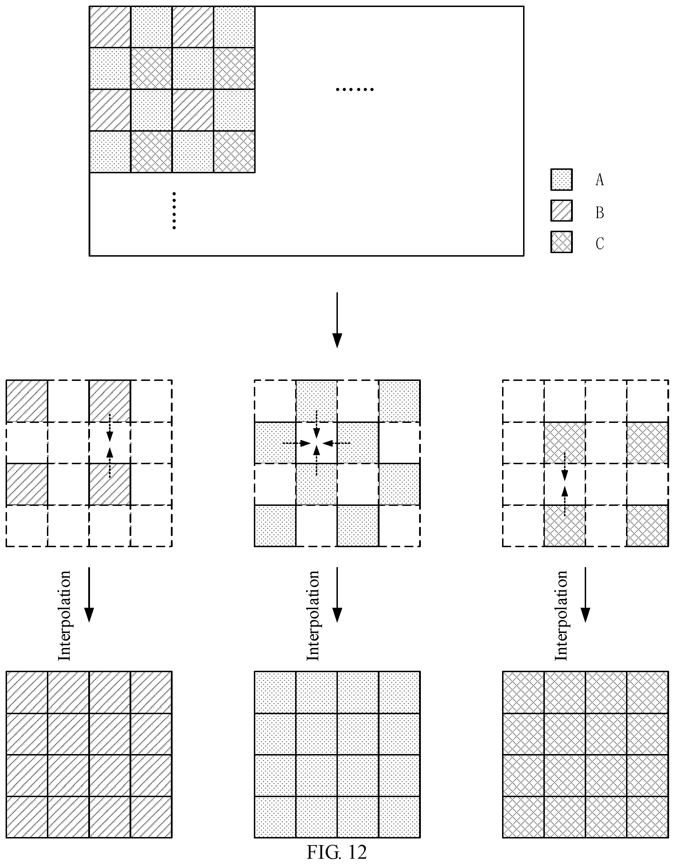

Referring to FIG. 12, in the existing filter array arranged in a Bayer array, a pixel corresponding to each filter can only generate a pixel signal having the value in one color channel. For example, the pixel corresponding to the pixel signal in the first row and first column from the left only has a value in the second color channel, and a value in the first color channel and a value in the third color channel of the pixel need to be obtained by interpolation; The pixel corresponding to the pixel signal in the first row and the second column only has a value in the first color channel, and a value in the second color channel and a value in the third color channel of the pixel need to be obtained by interpolation. The pixel corresponding to the pixel signal in the second row and the second column from the left only has a value in the third color channel, and a value in the first color channel and a value in the second color channel of the pixel need to be obtained by interpolation. In this way, the values in the other color channels of the pixel corresponding to each pixel signal need to be obtained by interpolation. However, an accuracy of the pixel signals obtained by interpolation is not high enough, which will cause a color reproduction of a final resulting color image to be inaccurate. In addition, in the existing filter array arranged in a Bayer array, when the pixel signal having a value in the first color channel is generated by interpolation and the pixel signal having a value in the second color channel is generated by interpolation, most of the pixel signals generated by interpolation can only be calculated using two pixel signals. For example, in the image signal in FIG. 12 that only contains pixel signals having values in the second color channel, the pixel corresponding to the pixel signal in the second row and the third column from the left does not have a value in the second color channel, and the value in the second color channel of the pixel needs to be obtained from the pixel signals of the pixels adjacent to the pixel and having a value in the second color channel, i.e., based on the pixel signal having a value in the second color channel in the first row and the third column and the pixel signal having a value in the second color channel in the third row and the third column. In another example, in the image signal in FIG. 12 that only contains the pixel signals having values in the third color channel, the pixel signal in the third row and the second column from the left does not have a value in the third color channel, and the value in the third color channel of the pixel corresponding to the pixel signal needs to be obtained from the pixel signals of the pixels adjacent to the pixel and having a value in the third color channel, i.e., based on the pixel signal having a value in the third color channel in the second row and the second column and the pixel signal having a value in the third color channel in the fourth row and the second column. In this way, the number of the pixel signals usable for generating the pixel signal by interpolation is relatively small, and the accuracy of the pixel signal generated by interpolation is not high enough.

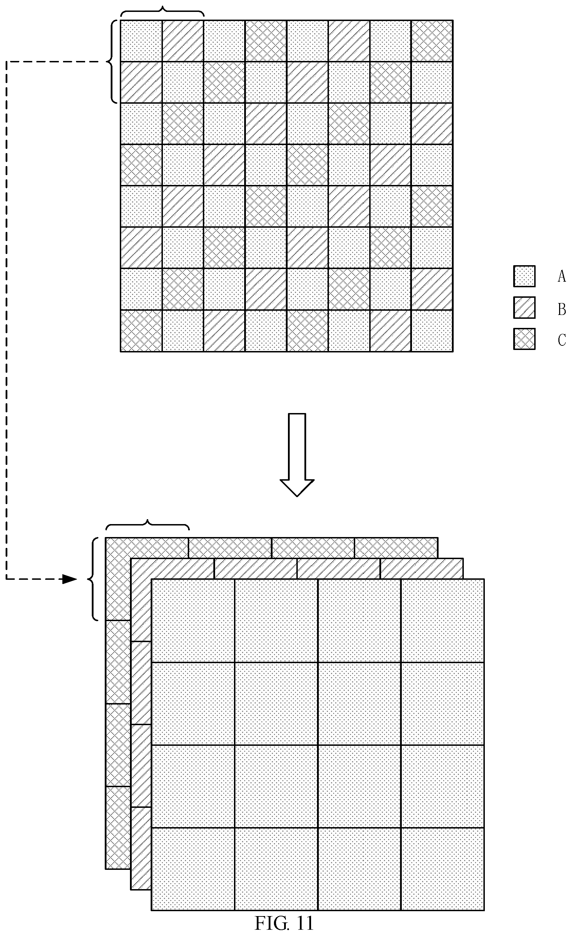

Referring to FIG. 2, FIG. 2, and FIG. 9 to FIG. 11, in the image sensor 10 according to the embodiments of the present disclosure, compared with a resolution of the pixel array 12 composed of the pixels 120, the resolution of the image composed of the pixel signals corresponding to the combined pixels is reduced. However, as each combined pixel has a pixel signal having a value in the first color channel, the value in the first color channel does not need to be obtained by interpolation, and the color reproduction of the final resulting color image will be more accurate. Since each combined pixel of the pixel array 12 directly obtains the corresponding pixel signal of the first color channel, more information can be obtained in the subsequent signal processing procedure.

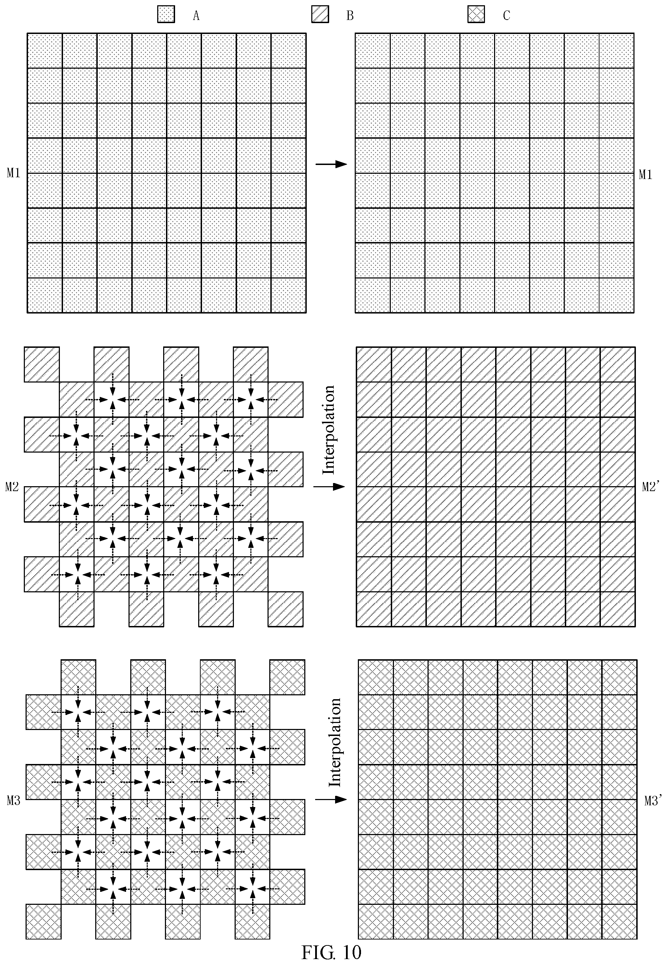

In addition, referring to FIG. 2, FIG. 4, FIG. 9, and FIG. 10, in the image sensor 10 according to the embodiments of the present disclosure, when the interpolation process is performed on a combined pixel that cannot output the third pixel signal, for most of the combined pixels, the value in the second color channel of the combined pixel can be calculated from four third pixel signals with each having a value in the second color channel. For example, in the second image signal M2 formed by a plurality of third pixel signals illustrated in FIG. 10, the third pixel signal in the second row and the third column from the left may be calculated from the third pixel signal in the first row and the third column from the left, the third pixel signal in the second row and the second column from the left, the third pixel signal in the second row and the fourth column from the left, and the third pixel signal in the third row and the third column from the left. In the image sensor 10 according to the embodiments of the present disclosure, when the interpolation process is performed on a combined pixel that cannot output the fourth pixel signal, for most of the combined pixels, the value in the third color channel of the combined pixel can be calculated from four fourth pixel signals each having a value in the third color channel. For example, in the third image signal M3 formed by a plurality of fourth pixel signals illustrated in FIG. 10, the fourth pixel signal in the third row and the third column from the left may be calculated from the fourth pixel signal in the second row and the third column from the left, the fourth pixel signal in the third row and the second column from the left, the fourth pixel signal in the third row and the fourth column from the left, and the fourth pixel signal in the fourth row and the third column from the left. As a result, the number of pixel signals usable for generating the pixel signal by interpolation is relatively large, and the accuracy of the pixel signal generated by interpolation is high.

In summary, in the image sensor 10 according to the embodiments of the present disclosure, each first set of filters 1131 and each second set of filters 1132 have the first color filters A, such that the pixel 120 corresponding to each first set of filters 1131 and the pixel 120 corresponding to each second set of filters 1132 can generate the pixel signal having a value in the first color channel. Therefore, in the process of generating the color image, the value in the first color channel does not need to be obtained by interpolation, and the color reproduction of the color image can be more accurate. Moreover, when performing the interpolation process on values in the second color channel (or values in the third color channel), most of the values in the second color channel to be generated by interpolation (or the values in the third color channel to be generated by interpolation) can be calculated from four adjacent pixel signals each having a value in the second color channel (or four adjacent pixels each having a value in the third color channel), such that the pixel signal having a value in the second color channel (or the third color channel) generated by interpolation can be more accurate, thereby further improving the accuracy of the color reproduction of the color image.

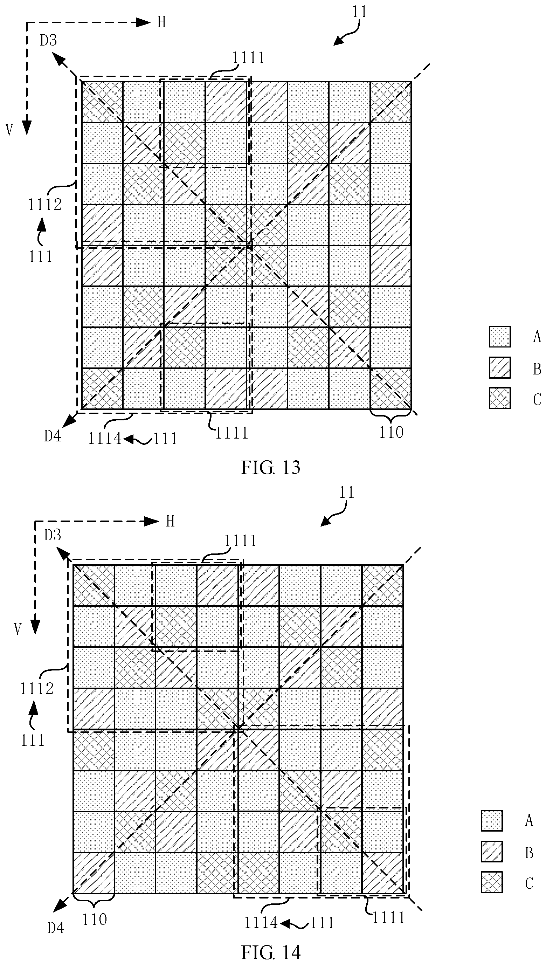

FIG. 13 to FIG. 15 are schematic diagrams each illustrating an arrangement of some filters 110 in the filter array 11 according to an embodiment of the present disclosure. In the filter array 11 shown in FIG. 13 to FIG. 15, each filter unit 1111 includes two first color filters A, one second color filter B, and one third color filter C. The second color filter B and the third color filter C in each filter unit 1111 are not adjacent to each other, and in each filter region 111, the filter units 1111 have different arrangements of filters 110. As such, since the second color filter B and the third color filter C are not adjacent to each other, and the filter units 1111 have different arrangements of filters 110, the filter array has different arrangements which are diversified and relatively random, such that the occurrence of more patterns and erroneous colors can be reduced.

The plurality of filter regions 111 includes a plurality of first filter regions 1112 and a plurality of second filter regions 1114, and the arrangement of the filter units 1111 in each first filter region 1112 is different from the arrangement of the filter units 1111 in each second filter region 1114.

For example, the arrangement of the first filter region 1112 in an embodiment of the present disclosure may be:

|   |   |   |   |
|---|---|---|---|
| C | A | A | B |
| A | B | C | A |
| A | C | B | A |
| B | A | A | C |

The arrangement of the second filter region 1114 in an embodiment of the present disclosure may be:

|   |   |   |   |
|---|---|---|---|
| B | A | A | C |
| A | C | B | A |
| A | B | C | A |
| C | A | A | B |

The plurality of first filter regions 1112 may be arranged in a third diagonal direction, and the plurality of second filter regions 1114 may be arranged in a fourth diagonal direction different from the third diagonal direction.

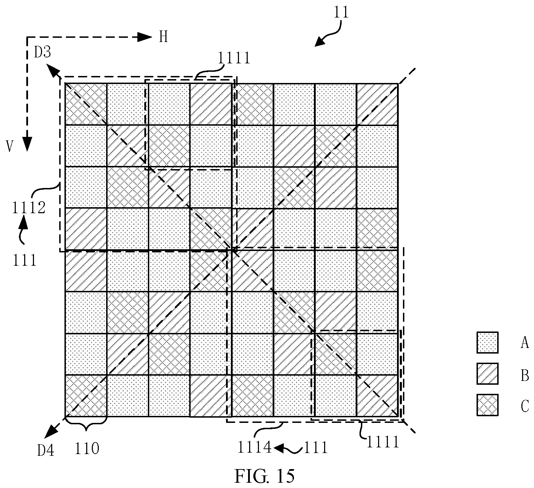

The arrangement of the plurality of first filter regions 1112 and the plurality of second filter regions 1114 may be: (1) referring to FIG. 13, the first filter regions 1112 and the second filter regions 1114 are arranged adjacently to each other in the vertical direction and the horizontal direction of the image sensor 10; (2) referring to FIG. 14, the plurality of first filter regions 1112 is arranged adjacently in the vertical direction of the image sensor 10, and the plurality of second filter regions 1114 is arranged adjacently to each other in the vertical direction of the image sensor 10; (3) referring to FIG. 15, the plurality of first filter regions 1112 is arranged adjacently to each other in the horizontal direction of the image sensor 10, and the plurality of second filter regions 1114 is arranged adjacently to each other in the horizontal direction of the image sensor 10. Of course, the arrangement of the plurality of first filter regions 1112 and the plurality of second filter regions 1114 is not limited to any of these examples.

FIG. 13 is a schematic diagram illustrating an arrangement of some filters 110 in the filter array 11 according to an embodiment of the present disclosure. Referring to FIG. 13, the arrangement of some filters 110 is:

|   |   |   |   |   |   |   |   |
|---|---|---|---|---|---|---|---|
| C | A | A | B | B | A | A | C |
| A | B | C | A | A | C | B | A |
| A | C | B | A | A | B | C | A |
| B | A | A | C | C | A | A | B |
| B | A | A | C | C | A | A | B |
| A | C | B | A | A | B | C | A |
| A | B | C | A | A | C | B | A |
| C | A | A | B | B | A | A | C |

Here, A denotes a first color filter, B denotes a second color filter, and C denotes a third color filter.

As shown in FIG. 13, the plurality of first filter regions 1112 is arranged in the third diagonal direction D3 (for example, a direction connecting the upper left corner and the lower right corner of the filter array 11 in FIG. 13), and the plurality of second filter regions 1114 is arranged in the fourth diagonal direction D4 (for example, a direction connecting the lower left corner and the upper right corner of the filter array 11 in FIG. 13). The third diagonal direction D3 is different from the fourth diagonal direction D4. For example, the third diagonal direction D3 may be perpendicular to the fourth diagonal direction D4.

It is to be noted that the third diagonal direction D3 and the fourth diagonal direction D4 are not limited to diagonals, but may also include directions parallel to the diagonals. The term "direction" here is not a single pointing direction, but can be understood as a concept of a "straight line" indicating an arrangement and having two pointing directions at both ends of the straight line. In addition, in other embodiments, the third diagonal direction D3 may alternatively be the direction connecting the lower left corner and the upper right corner of the filter array 11, and the fourth diagonal direction D4 may alternatively be the direction connecting the upper left corner and the lower right corner of the filter array 11. In this case, positions of the first filter regions 1112 and the second filter regions 1114 are changed correspondingly to a change in the diagonal directions.

As illustrated in FIG. 13, the first filter regions 1112 and the second filter regions 1114 are arranged adjacently to each other in the vertical direction V of the image sensor 10 (illustrated in FIG. 13), and also arranged adjacently to each other in the horizontal direction H. That is, the plurality of filter regions 111 is arranged periodically in the order of a first filter region 1112 and a second filter region 1114 in the vertical direction V, and the plurality of filter regions 111 is arranged periodically in the order of a first filter region 1112 and a second filter region 1114 in the horizontal direction H.

It is to be noted that the arrangement in which the first filter regions 1112 and the second filter regions 1114 are arranged adjacently to each other in the vertical direction V and adjacently to each other in the horizontal direction H is not limited to the one illustrated in FIG. 13. Alternatively, the plurality of filter regions 111 may be arranged periodically in the order of a first filter region 1112 and a second filter region 1114 or the order of a second filter region 1114 and a first filter region 1112 in the vertical direction V (from left to right and from top to bottom, the same below), and the plurality of filter regions 111 may be arranged periodically in the order of a first filter region 1112 and a second filter region 1114 or the order of a second filter region 1114 and a first filter region 1112 in the horizontal direction H (from left to right and from top to bottom, the same below).

FIG. 14 is a schematic diagram illustrating an arrangement of some filters 110 in the filter array 11 according to another embodiment of the present disclosure. Referring to FIG. 14, the arrangement of some filters 110 is:

| C | A | A | B | B | A | A | C |
|---|---|---|---|---|---|---|---|
| A | B | C | A | A | C | B | A |
| A | C | B | A | A | B | C | A |
| B | A | A | C | C | A | A | B |
| C | A | A | B | B | A | A | C |
| A | B | C | A | A | C | B | A |
| A | C | B | A | A | B | C | A |
| B | A | A | C | C | A | A | B |

Here, A denotes a first color filter, B denotes a second color filter, and C denotes a third color filter.

As shown in FIG. 14, the plurality of first filter regions 1112 is arranged adjacently to each other in the vertical direction V of the image sensor 10, and the plurality of second filter regions 1114 is arranged adjacently to each other in the vertical direction V of the image sensor 10. In the horizontal direction H of the image sensor 10, the plurality of filter regions 111 is arranged periodically in the order of a first filter region 1112 and a second filter region 1114.

FIG. 15 is a schematic diagram illustrating an arrangement of some filters 110 in the filter array 11 according to another embodiment of the present disclosure. Referring to FIG. 15, the arrangement of some filters 110 is:

| C | A | A | B | C | A | A | B |
|---|---|---|---|---|---|---|---|
| A | B | C | A | A | B | C | A |
| A | C | B | A | A | C | B | A |
| B | A | A | C | B | A | A | C |
| B | A | A | C | B | A | A | C |
| A | C | B | A | A | C | B | A |
| A | B | C | A | A | B | C | A |
| C | A | A | B | C | A | A | B |

Here, A denotes a first color filter, B denotes a second color filter, and C denotes a third color filter.

As shown in FIG. 15, the plurality of first filter regions 1112 is arranged adjacently to each other in the horizontal direction H of the image sensor 10, and the plurality of second filter regions 1114 is arranged adjacently to each other in the horizontal direction H of the image sensor 10. In the vertical direction V of the image sensor 10, the plurality of filter regions 111 is arranged periodically in the order of a first filter region 1112 and a second filter region 1114.

In some embodiments, the processing circuit 13 is configured to calculate an average value of the electrical signals generated by the pixels 120 corresponding to the first color filters A in each filter region 111 as the first color signal, an average value of the electrical signals generated by the pixels 120 corresponding to the second color filters B in each filter region 111 as the second color signal, and an average value of the electrical signals generated by the pixels 120 corresponding to the third color filters C in each filter region 111 as the third color signal.

In an example where each filter region 111 includes 2*2 filter units 1111 and each filter unit 1111 includes two first color filters A, one second color filter B and one third color filter C, each filter region 111 includes eight first color filters A, four second color filters B and four third color filters C. If the pixel values corresponding to the electrical signals generated by the pixels 120 corresponding to the eight first color filters A are 41, 47, 43, 37, 45, 39, 35, and 33, respectively, the first color signal is (41+47 +43+37+45+39+35+33)/8=40. If the pixel values corresponding to the electrical signals generated by the pixels 120 corresponding to the four second color filters B are 24, 26, 25, and 27, respectively, the second color signal is (24+26+25+27)/4=25.5. If the pixel values corresponding to the electrical signals generated by the pixels 120 corresponding to the four third color filters C are 52, 54, 54, and 52, the second color signal is (52+54+54+52)/4=53.

In some embodiments, the processing circuit 13 may be configured to perform a gamma correction process on the first intermediate image. With the gamma correction process performed on the first intermediate image, the luminance of the processed first intermediate image, when displayed, will be more suitable for viewing by the user. Specifically, $f(I)=I^\gamma$ can be used for gamma correction, where $f(I)$ is the luminance value of the first intermediate image after correction, I is the luminance value of the first intermediate image before correction, and $\gamma$ is a first correction coefficient. When $\gamma<1$, the dynamic range of a low-luminance area of the first intermediate image can be increased, the dynamic range of a high-luminance area of the first intermediate image can be reduced, and the overall luminance of the first intermediate image can be increased. When $\gamma>1$, the dynamic range of the low-luminance area of the first intermediate image can be reduced, the dynamic range of the high-luminance area of the first intermediate image can be increased, and the overall luminance of the first intermediate image can be reduced. The user can set the corresponding correction coefficient $\gamma$ depending on his/her own viewing requirements, such that the display effect of the adjusted first intermediate image can be improved.

In some embodiments, the processing circuit 13 may be configured to perform a white balance process, a color correction matrix process, and a gamma correction process on the first color signal, the second color signal, and the third color signal, and convert the processed first color signal, the processed second color signal, and the processed third color signal into a chrominance-luminance separation space to obtain the second intermediate images. After the white balance process, color correction matrix process and gamma correction process, the first color signal, the second color signal and the third color signal are more accurate, such that the second intermediate image obtained by converting them into the chrominance-luminance separation space is also more accurate. The white balance process can be implemented by using algorithms such as gray world method, automatic white balance method based on dynamic threshold, mirror method, etc. Different white balance algorithms can be used depending on different scenes or the user's choice, such that the processed color signals can be more accurate and more in line with the user's viewing requirements.

The color correction matrix can be:

$$\begin{bmatrix} R' \\ G' \\ B' \end{bmatrix} = \begin{bmatrix} CMC11 & CMC12 & CMC13 \\ CMC21 & CMC22 & CMC23 \\ CMC31 & CMC32 & CMC33 \end{bmatrix} \begin{bmatrix} R \\ G \\ B \end{bmatrix}$$

where R' refers to the second color signal corrected based on the color correction matrix, G' refers to the first color signal corrected based on the color correction matrix, B' refers to the third color signal corrected based on the color correction matrix, CMC11, CMC12, CMC13, CMC21, CMC22, CMC23, CMC31, CMC32, and CMC33 together form the correction matrix, R refers to the second color signal before correction based on the color correction matrix, and G refers to the first color signal before correction based on the color correction matrix, and B refers to the third color signal before correction based on the color correction matrix. The correction matrix can be selected according to the color temperature corresponding to the first color signal, the second color signal and the third color signal before adjustment, such that the first color signal, the second color signal and the third color signal processed based on the color correction matrix can be more accurate.

The gamma correction can be based on $f(I)=I^\gamma$, where $f(I)$ is the corrected first color signal, second color signal, and third color signal, and I is the first color signal, second color signal, and third color signal before correction, $\gamma$ is a second correction coefficient which may be same as or different from the first correction coefficient, and the present disclosure is not limited to this.

The processed first color signal, the processed second color signal and the processed third color signal are converted into a chrominance-luminance separation space to obtain the second intermediate images. Specifically, the following equation can be used for conversion: $Y=0.257*R+0.564*G+0.098*B+16$, $Cb=-0.148*R-0.291*G+0.439*B+128$, $Cr=0.439*R-0.368*G-0.071*B+128$, where Y is the luminance value, Cb is the blue component, Cr is the red component, R is the processed second color signal, G is the processed first color signal, and B is the processed third color signal. Here, the second intermediate images may include two frames, and the two frames of the second intermediate images are the second intermediate image corresponding to the blue component and the second intermediate image corresponding to the red component, respectively.

Of course, the following equation can also be used to convert the processed first color signal, the processed second color signal and the processed third color signal into the chrominance-luminance separation space: $Y=0.29900*R+0.58700*G+0.11400 *B$, $Cb=-0.16874*R-0.33126*G+0.50000*B+128$, $Cr=0.50000*R-0.41869*G-0.08131*B+128$, and the present disclosure is not limited to this.

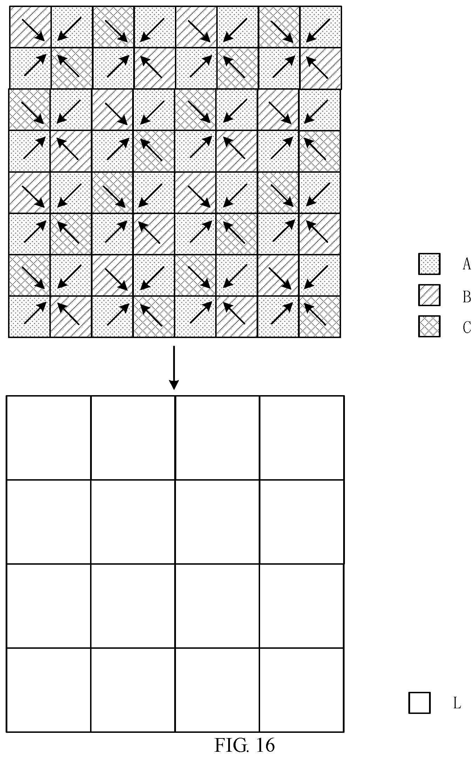

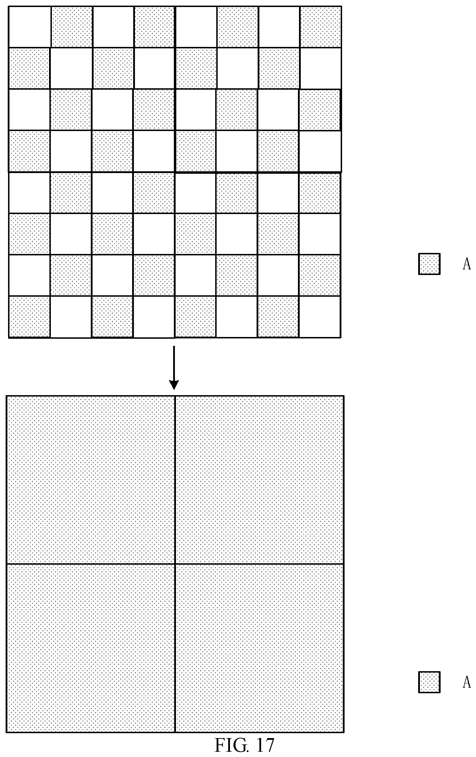

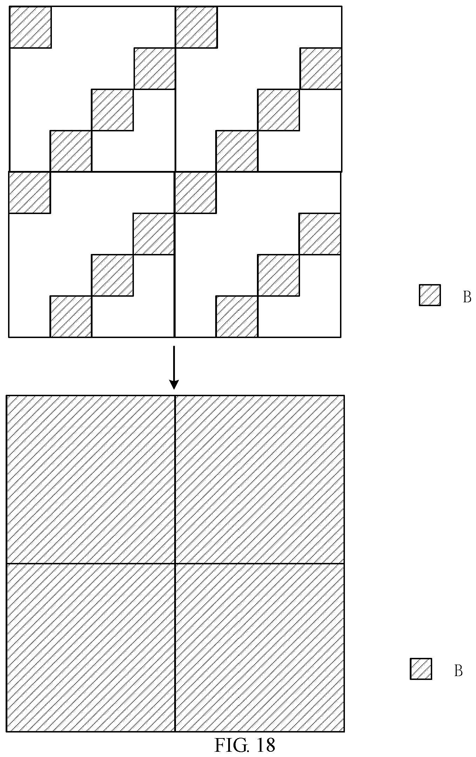

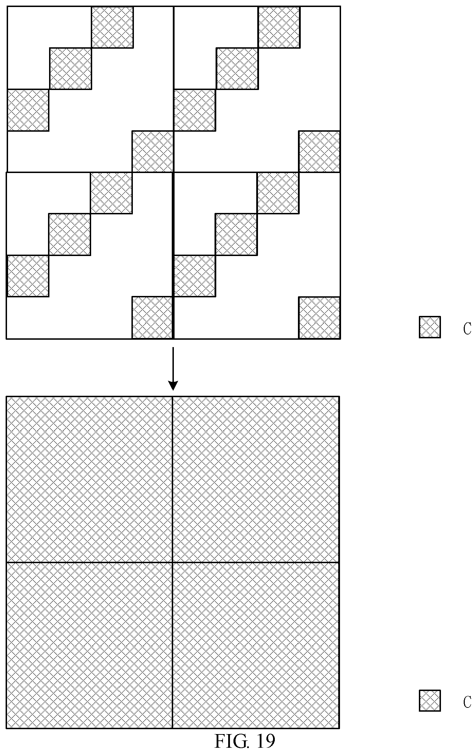

When each filter region 111 includes 2*2 filter units 1111, and each filter unit 1111 includes two first color filters A, one second color filter B, and one third color filter C, each filter unit 1111 can correspond to one combined luminance value, each filter region 111 can correspond to 4 combined luminance values, and each filter region 111 can only correspond to one first color signal, one second color signal, and the third color signal. Taking the filter array 11 of FIG. 3 as an example, the process of obtaining the combined luminance value L can be described with reference to in FIG. 16. The pixels 120 corresponding to each filter unit 1111 are combined for outputting as the combined luminance value L. For example, the combined luminance value L may be R+2G+B. The process of obtaining the first color signal can be described with reference to FIG. 17. The pixel 120 corresponding to the first color filter A in each filter region 111 generates the first color signal. The process of obtaining the second color signal can be described with reference to FIG. 18. The pixel 120 corresponding to the second color filter B in each filter region 111 generates the second color signal. The process of obtaining the third color signal can be described with reference to FIG. 19. The pixel 120 corresponding to the third color filter C in each filter region 111 generates the third color signal. After the first color signal, the second color signal and the third color signal are converted into the chrominance-luminance separation space, each filter region 111 corresponds to one Cr and one Cb, that is, the resolution of the first intermediate image is 4 times the resolution of the second intermediate image.

Generally, an image in Y/Cb/Cr format can allow the resolution of Cb/Cr to be lower than that of Y. For example, the format of Y/Cb/Cr is 4:2:2 or 4:2:0. In a Y/Cb/Cr image in a format of 4:2:0, every four Ys correspond to one Cr and one Cb. Therefore, in the embodiment of the present disclosure, the first intermediate image representing the luminance Y, the second intermediate image representing the red component Cr, and the second intermediate image representing the blue component Cb may be fused to form the first target image.

In some embodiments, the processing circuit 13 may be configured to perform an up-sampling process on the second intermediate images such that one filter region 111 corresponds to a plurality of color values, so as to form a third intermediate image, and fuse the first intermediate image and the third intermediate image to obtain the first target image. For example, when each filter region 111 includes 2*2 filter units 1111, and each filter unit 1111 includes two first color filters A, one second color filter B, and one first color filter C, the resolution of the first intermediate image is 4 times that of the second intermediate images. Therefore, the second intermediate images can be up-sampled, for example, the second intermediate images can be enlarged four times, such that one filter region 111 corresponds to four Crs and four Cbs to obtain the third intermediate image. The resolution of the third intermediate image is the same as the resolution of the first intermediate image, such that the first target image obtained by fusing the first intermediate image and the third intermediate image will have more abundant color information.

In some embodiments, the processing circuit 13 may be configured to perform a high-pass filtering process on the first intermediate image. In this way, by performing the high-pass filtering process on the first intermediate image, the high-pass filtering process can effectively retain detailed information and remove noise, such that the processed first intermediate image can be more accurate.

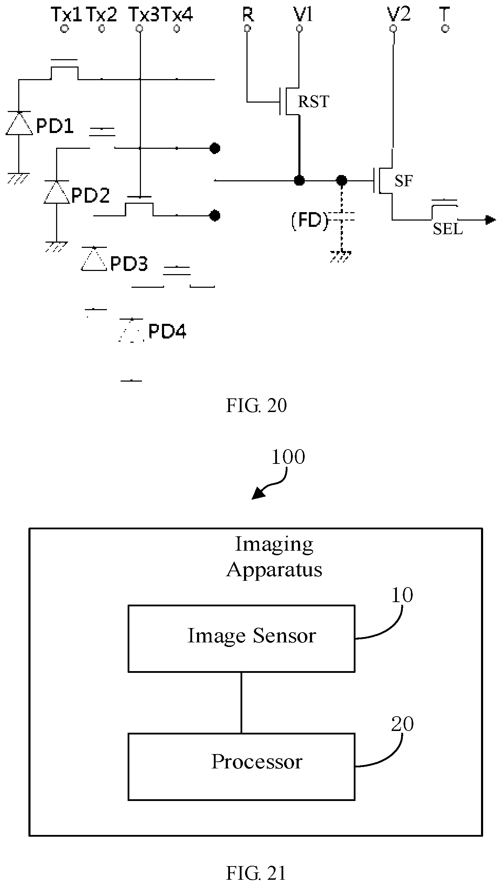

Referring to FIG. 20, in some embodiments, the processing circuit 13 may include a reading circuit as shown in FIG. 20. With the reading circuit, the electrical signals generated by the pixels 120 corresponding to each filter unit 1111 can be combined for outputting as the combined luminance value. Specifically, four pixels PD1, PD2, PD3, and PD4 corresponding to one filter unit 1111 can be simultaneously turned on via control terminals Tx1, Tx2, Tx3, and Tx4, such that the charges generated by the four pixels corresponding to one filter unit 1111 after receiving light can be transferred to a floating diffusion node FD. V2 is a high level, and SF is an amplifying circuit. By inputting the high-level V2, the amplifying circuit SF amplifies the electrical signal corresponding to the charge at the floating diffusion node FD. T is a selection signal, and SEL is a selection circuit. By inputting the selection signal T, the electric signal corresponding to the selection circuit SEL and amplified by the amplifying circuit SF can be outputted. R is a reset signal, VI is a high level, and RST is a reset circuit. By inputting the reset signal R and the high-level VI, the floating diffusion node FD can be reset by the reset circuit RST.

Referring to FIG. 21, the present disclosure further provides an imaging apparatus 100. The imaging apparatus 100 includes the image sensor 10 described in any of the above embodiments.

In some embodiments, the imaging apparatus 100 further includes a processor 20. The processor 20 may be configured to generate a first color signal, a second color signal, and a third color signal based on the electrical signals generated by the pixels 120 corresponding to each filter region 111, the first color signal representing a value in a first color channel of the light applied to the pixels 120 corresponding to the filter region 111, the second color signal representing a value in a second color channel of the light applied to the pixels 120 corresponding to the filter region 111, and the third color signal representing a value in a third color channel of the light applied to the pixels 120 corresponding to the filter region 111. The processor 20 may be further configured to process the first color signal, the second color signal, and the third color signal to obtain a plurality of second intermediate images representing chrominance values of the filter region 111, and fuse the first intermediate image and the plurality of second intermediate images to obtain a first target image.

In the above embodiment of the present disclosure, the functions implemented by the processing circuit 13 can be implemented by the processor 20, and details thereof will be omitted here.

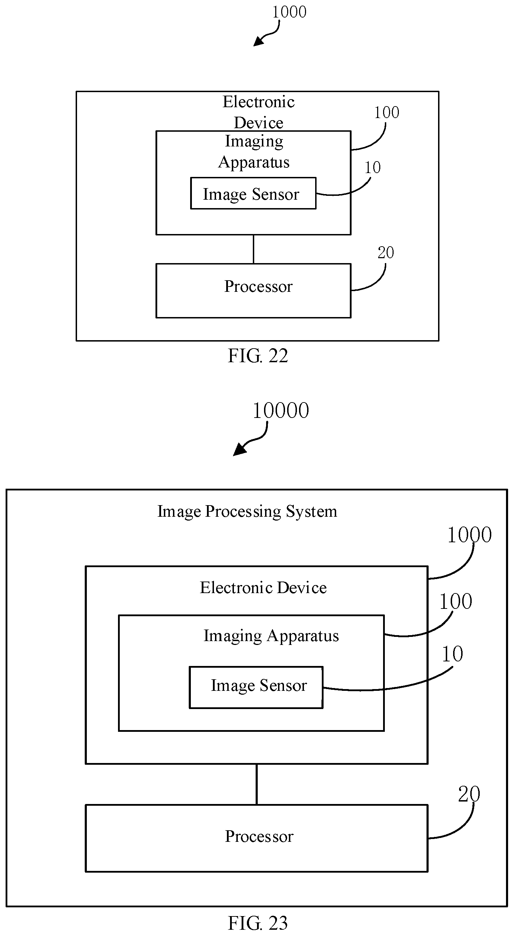

Referring to FIG. 22, the present disclosure also provides an electronic device 1000. The electronic device 1000 can be a mobile phone, a tablet, a laptop, a smart watch, a smart bracelet, a smart helmet, smart glasses, an unmanned vehicle (such as a drone, an unmanned automobile, an unmanned ship), etc., and the present disclosure is not limited to any of these examples. The electronic device 1000 includes an imaging apparatus 100. The imaging apparatus 100 includes the image sensor 10 according to in any of the above embodiments. The electronic device 1000 also includes a processor 20. The processor 20 of the electronic device 1000 can perform the same functions as those of the processor 20 in the imaging apparatus 100 illustrated in FIG. 21, and details thereof will be omitted here.

Referring to FIG. 23, the present disclosure also provides an image processing system 10000. The image processing system 10000 includes an electronic device 1000. The electronic device 1000 includes an imaging apparatus 100. The imaging apparatus 100 includes the image sensor 10 according to any of the above embodiments. The image processing system 10000 also includes a processor 20. The processor 20 of the image processing system 10000 can perform the same functions as those of the processor 20 in the imaging apparatus 100 illustrated in FIG. 21, and details thereof will be omitted here.

Here, the processor 20 can be located in a server responsible for cloud computing, or can be located in a server responsible for edge computing. In this way, the subsequent processing of the pixel signals outputted by the image sensor 10 can be offloaded to the server for execution, which can save power consumption of the imaging apparatus 100 or the electronic device 1000.

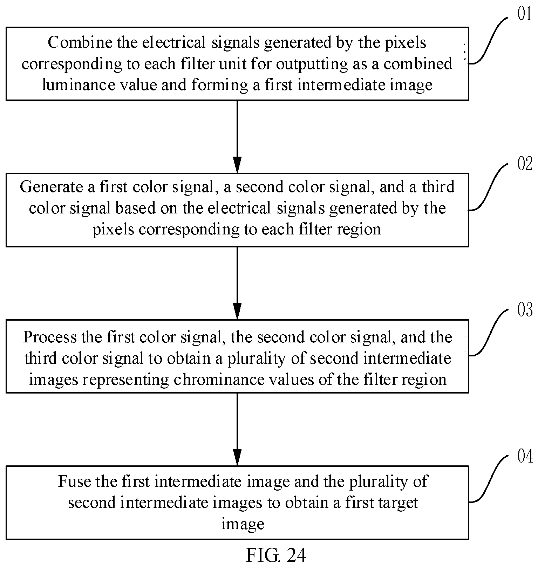

Referring to FIG. 24, the present disclosure also provides a signal processing method. The signal processing method can be applied in the image sensor 10 according to any of the above embodiments. The signal processing method includes:

01: combining the electrical signals generated by the pixels 120 corresponding to each filter unit 1111 for outputting as a combined luminance value and forming a first intermediate image, the combined luminance value representing luminance of light applied to the pixels 120 corresponding to the filter unit 1111; and

02: generating a first color signal, a second color signal, and a third color signal based on the electrical signals generated by the pixels 120 corresponding to each filter region 111, the first color signal representing a value in a first color channel of the light applied to the pixels 120 corresponding to the filter region 111, the second color signal representing a value in a second color channel of the light applied to the pixels 120 corresponding to the filter region 111, and the third color signal representing a value in a third color channel of the light applied to the pixels 120 corresponding to the filter region 111;

03: processing the first color signal, the second color signal, and the third color signal to obtain a plurality of second intermediate images representing chrominance values of the filter region 111; and

04: fusing the first intermediate image and the plurality of second intermediate images to obtain a first target image.

In some embodiments, the filter array 11 may include a plurality of first sets of filters 1131 and a plurality of second sets of filters 1132. Each of the plurality of first sets of filters 1131 may include a plurality of first color filters A and a plurality of second color filters B. A number of first color filters A and a number of second color filters B are same in each of the plurality of first sets of filters 1131. Each of the plurality of second sets of filters 1132 may include a plurality of first color filters A and a plurality of third color filters C. A number of first color filters A and a number of third color filters C are same in each of the plurality of second sets of filters 1132. A sub-array formed by arrangement of all the first sets of filters 1131 and all the second sets of filters 1132 is a part of the filter array 11, or a sub-array formed by arrangement of all the filter regions 111 is a part of the filter array 11. The signal processing method may include:

in a low-luminance mode, obtaining the first target image;

in a clear texture mode:

> combining the electrical signals generated by the pixels 120 corresponding to each of the plurality of first sets of filters 1131 to generate a first pixel signal and a third pixel signal, the first pixel signal representing a value in the first color channel of the light applied to the pixels 120 corresponding to the first set of filters 1131, and the third pixel signal representing a value in the second color channel of the light applied to the pixels 120 corresponding to the first set of filters 1131, and
> combining the electrical signals generated by the pixels 120 corresponding to each of the plurality of second sets of filters 1132 to generate a second pixel signal and a fourth pixel signal, the second pixel signal representing a value in the first color channel of the light applied to the pixels 120 corresponding to the second set of filters 1132, and the fourth pixel signal representing a value in a third color channel of the light applied to the pixels 120 corresponding to the second set of filters 1132; and
> obtaining a second target image according to the first pixel signal, the second pixel signal, the third pixel signal, and the fourth pixel signal.

In some embodiments, the operation of obtaining the second target image according to the first pixel signal, the second pixel signal, the third pixel signal, and the fourth pixel signal may include: calculating an average value of the electrical signals generated by the pixels 120 corresponding to the first color filters A in each filter region 111 as the first color signal, calculating an average value of the electrical signals generated by the pixels 120 corresponding to the second color filters B in each filter region 111 as the second color signal, and calculating an average value of the electrical signals generated by the pixels 120 corresponding to the third color filters C in each filter region 111 as the third color signal.

In some embodiments, the signal processing method may include: performing a gamma correction process on the first intermediate image.

In some embodiments, the signal processing method may include: performing a white balance process, a color correction matrix process, and a gamma correction process on the first color signal, the second color signal, and the third color signal. The step 03 may include: converting the processed first color signal, the processed second color signal, and the processed third color signal into a chrominance-luminance separation space to obtain the plurality of second intermediate images.

In some embodiments, the step 04 may include: performing an up-sampling process on the plurality of second intermediate images such that one filter region corresponds to a plurality of color values, so as to form a third intermediate image, and fusing the first intermediate image and the third intermediate image to obtain the first target image.

In some embodiments, the signal processing method may include: performing a high-pass filtering process on the first intermediate image.

The embodiment of the present disclosure also provides a computer device. The computer device may be the electronic device 100.

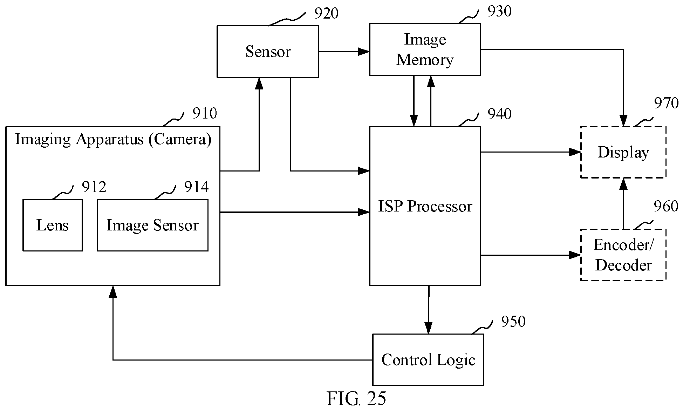

The above computer device includes an image processing circuit, which may be implemented by hardware and/or software components, and may include various processing units that define an Image Signal Processing (ISP) pipeline. FIG. 25 is a schematic diagram of an image processing circuit according to an embodiment. As illustrated in FIG. 25, for the purpose of illustration, only aspects of the image processing technology relevant to the embodiments of the present disclosure are shown.

As illustrated in FIG. 25, the image processing circuit includes an ISP processor 940 and a control logic 950. Here, the ISP processor 940 can be applied to various electronic devices and serve as a processor in the electronic devices. Here, one of the various electronic devices may be an electronic device 100 including the image sensor 10.

Image data captured by the imaging apparatus 910 is first processed by the ISP processor 940. The ISP processor 940 analyzes the image data to capture image statistics information that can be used to determine one or more control parameters for the imaging apparatus 910. The imaging apparatus 910 may include a camera having one or more lenses 912 and an image sensor 914. The image sensor 914 may be the image sensor 10. The image sensor 914 may include a filter array. The image sensor 914 may obtain light intensity and wavelength information captured by each pixel of the image sensor 914, and provide a set of raw image data that can be processed by the ISP processor 940, e.g., raw image data composed of a plurality of first pixel signals, a plurality of second pixel signals, a plurality of third pixel signals, and a plurality of fourth pixel signals. The sensor 920 (e.g., a gyroscope) may provide collected processing parameters (e.g., anti-shake parameter) to the ISP processor 940 based on a type of an interface the sensor 920. The interface of the sensor 920 may use a Standard Mobile Imaging Architecture (SMIA) interface, another serial or parallel camera interface, or any combination thereof.

In addition, the image sensor 914 may transmit the raw image data to the sensor 920, and the sensor 920 may provide the raw image data to the ISP processor 940 based on the type of the interface of the sensor 920, or the sensor 920 may store the raw image data in the image memory 930.

The ISP processor 940 can process the raw image data pixel by pixel in any of a variety of formats. For example, each image pixel may have a bit depth of 8, 10, 12, or 14 bits. The ISP processor 940 may perform one or more image processing operations on the raw image data, and collect statistical information about the image data. Here, the image processing operations can be performed with same or different bit depth accuracies.

The ISP processor 940 may alternatively receive image data from the image memory 930. For example, the interface of the sensor 920 can transmit the raw image data to the image memory 930, and the raw image data in the image memory 930 can be provided to the ISP processor 940 for processing. The image memory 930 may be a part of a memory device, a storage device, or an independent dedicated memory in an electronic device, and may include Direct Memory Access (DMA) features.

Upon receiving the raw image data from an interface of the image sensor 914, the interface of the sensor 920, or the image memory 930, the ISP processor 940 can perform one or more image processing operations, such as time-domain filtering, or as another example, process the first pixel signal, the second pixel signal, the third pixel signal, the fourth pixel signal to obtain a color image, etc. The processed image data (for example, the color image) can be transmitted to the image memory 930 for further processing before being displayed. The ISP processor 940 can receive the processed data from the image memory 930, and perform image data processing on the processed data in an original domain and in RGB and YCbCr color spaces. The image data processed by the ISP processor 940 may be outputted to the display 970 for viewing by the user and/or further processing by a graphics engine or a Graphics Processing Unit (GPU). In addition, the output of the ISP processor 940 can also be transmitted to the image memory 930, and the display 970 can read the image data from the image memory 930. In one embodiment, the image memory 930 can be configured to implement one or more frame buffers. In addition, the output of the ISP processor 940 can be transmitted to an encoder/decoder 960 for encoding/decoding the image data. The encoded image data can be saved and decompressed before being displayed on the display device 970. The encoder/decoder 960 may be implemented by a CPU or GPU or a co-processor. For example, when the computer device is in a preview mode or a video recording mode, the ISP processor 940 can process an image signal including a plurality of image signal units U (illustrated in FIG. 34) to generate image data of a color image. The ISP processor 940 can transmit the color image to the encoder/decoder 960 for encoding the color image. The encoded color image can be saved in the image memory 930 and can also be displayed on the display 970.

The statistical data determined by the ISP processor 940 can be transmitted to the control logic unit 950. For example, the statistical data may include statistical information of the image sensor 914 for automatic exposure, automatic white balance, automatic focusing, flicker detection, black level compensation, and shading correction for the lens 912. The control logic 950 may include a processor and/or a micro-controller that executes one or more routines (such as firmware). The one or more routines can determine control parameters for the imaging apparatus 910 and control parameters for the ISP processor 940 based on the received statistical data. For example, the control parameters for the imaging apparatus 910 may include control parameters for the sensor 920 (such as gain, integration time of exposure control, anti-shake parameters, etc.), flash control parameters for the camera, control parameters for the lens 912 (such as focus or focal length for zooming), or any combination thereof. The ISP control parameters may include gain level and color correction matrices for automatic white balance and color adjustment (for example, during RGB processing), and shading correction parameters for the lens 912.

In the present disclosure, the description with reference to the terms "one embodiment", "some embodiments", "an example", "a specific example", or "some examples", etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Moreover, the specific features, structures, materials or characteristics as described can be combined in any one or more embodiments or examples as appropriate. In addition, those skilled in the art can combine and integrate different embodiments or examples, or features thereof, as described in the present disclosure, provided that they do not contradict each other.

In addition, the terms "first" and "second" are only used for the purpose of description, and should not be construed as indicating or implying any relative importance or implicitly indicating the number of defined technical features. Therefore, the features defined with "first" and "second" may explicitly or implicitly include at least one of the features. In the description of the present disclosure, "a plurality of" means at least two, e.g., two, three, etc., unless specifically defined otherwise.

Any process or method described in the flowchart or described otherwise herein can be understood as a module, segment or part of codes that include one or more executable instructions for implementing steps of specific logical functions or processes. It can be appreciated by those skilled in the art that the scope of the preferred embodiments of the present disclosure includes additional implementations where functions may not be performed in the order as shown or discussed, including implementations where the involved functions are performed substantially in parallel or even in a reverse order.

Although the embodiments of the present disclosure have been shown and described above, it can be appreciated that the above embodiments are exemplary only, and should not be construed as limiting the present disclosure.

Various changes, modifications, replacements and variants can be made to the above embodiments by those skilled in the art without departing from the scope of the present disclosure.

**Claims**

1. An image sensor, comprising:

   a filter array, comprising a plurality of filter regions each comprising a plurality of filter units, each filter unit comprising at least one first color filter, at least one second color filter, and at least one third color filter;
   a pixel array, comprising a plurality of pixels each corresponding to one filter in the filter array and configured to receive light passing through the corresponding filter to generate an electrical signal; and
   a processing circuit, provided on a substrate having the pixel array and configured to:

   combine the electrical signals generated by the pixels corresponding to each filter unit for outputting as a combined luminance value and forming a first intermediate image, the combined luminance value representing luminance of light applied to the pixels corresponding to the filter unit;
   generate a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and
   process the first color signal, the second color signal, and the third color signal to obtain a plurality of second intermediate images representing chrominance values of the filter region, and fuse the first intermediate image and the plurality of second intermediate images to obtain a first target image.

2. The image sensor according to claim 1, wherein a number of filter units in each filter region is M*M, where M is an integer greater than or equal to 2, and a number of filters in each filter unit is N*N, where N is an integer greater than or equal to 2.

3. The image sensor according to claim 1 or 2, wherein the plurality of filter units has a same ratio between a number of first color filters, a number of second color filters, and a number of the third color filters in each filter unit.

4. The image sensor according to any one of claims 1 to 3, wherein each first color filter is a green filter, each second color filter is a red filter, and each third color filter is a blue filter.

5. The image sensor according to any one of claims 1 to 4, wherein the filter array comprises a plurality of first sets of filters and a plurality of second sets of filters, each of the plurality of first sets of filters comprising a plurality of first color filters and a plurality of second color filters, a number of first color filters and a number of second color filters being same in each of the plurality of first sets of filters, and each of the plurality of second sets of filters comprising a plurality of first color filters and a plurality of third color filters, a number of first color filters and a number of third color filters being same in each of the plurality of second sets of filters,

   a sub-array formed by arrangement of all the first sets of filters and all the second sets of filters is a part of the filter array, or a sub-array formed by arrangement of all the filter regions is a part of the filter array,
   in a low-luminance mode, the image sensor is configured to obtain the first target image;
   in a clear texture mode, the processing circuit is configured to:

   combine the electrical signals generated by the pixels corresponding to each of the plurality of first sets of filters to generate a first pixel signal and a third pixel signal, the first pixel signal representing a value in the first color channel of light applied to the pixels corresponding to the first set of filters, and the third pixel signal representing a value in the second color channel of the light applied to the pixels corresponding to the first set of filters, and
   combine the electrical signals generated by the pixels corresponding to each of the plurality of second sets of filters to generate a second pixel signal and a fourth pixel signal, the second pixel signal representing a value in the first color channel of light applied to the pixels corresponding to the second set of filters, and the fourth pixel signal representing a value in a third color channel of the light applied to the pixels corresponding to the second set of filters, and
obtain a second target image according to the first pixel signal, the second pixel signal, the third pixel signal, and the fourth pixel signal.

6. The image sensor according to claim 5, wherein the plurality of first sets of filters is arranged in a first diagonal direction, and the plurality of second sets of filters is arranged in a second diagonal direction different from the first diagonal direction.

7. The image sensor according to claim 6, wherein the plurality of first sets of filters and the plurality of second sets of filters are arranged adjacently to each other in a vertical direction and a horizontal direction of the image sensor.

8. The image sensor according to any one of claims 5 to 7, wherein

in each of the plurality of first sets of filters, the plurality of first color filters and the plurality of second color filters are arranged adjacently to each other in a vertical direction and a horizontal direction of the image sensor, and
in each of the plurality of second sets of filters, the plurality of first color filters and the plurality of third color filters are arranged adjacently to each other in the vertical direction and the horizontal direction of the image sensor.

9. The image sensor according to any one of claims 5 to 7, wherein

in each of the plurality of first sets of filters, the filters are arranged in rows and the filters in each row have a same color, or
in each of the plurality of first sets of filters, the filters are arranged in columns and the filters in each column have a same color,
in each of the plurality of second sets of filters, the filters are arranged in rows and the filters in each row have a same color, or
in each of the plurality of second sets of filters, the filters are arranged in columns and the filters in each column have a same color.

10. The image sensor according to any one of claims 5 to 9, further comprising a microlens array, the microlens array comprising a plurality of sets of microlenses each corresponding to one set of filters and to the pixels corresponding to the one set of filters.

11. The image sensor according to claim 10, wherein each of the plurality of sets of microlenses comprises a plurality of microlenses each corresponding to one filter and one pixel.

12. The image sensor according to claim 10, wherein each of the plurality of sets of microlenses comprises one microlens corresponding to one set of filters and to the pixels corresponding to the one set of filters.

13. The image sensor according to any one of claims 1 to 4, wherein each filter unit comprises two first color filters, one second color filter, and one third color filter, and the second color filter and the third color filter in each filter unit are not adjacent to each other, and in each filter region, the plurality of filter units has different arrangements of filters.

14. The image sensor according to claim 13, wherein the plurality of filter regions comprises a plurality of first filter regions and a plurality of second filter regions, each of the plurality of first filter regions has a different arrangement of filter units than each of the plurality of second filter regions.

15. The image sensor according to claim 14, wherein the plurality of first filter regions is arranged in a third diagonal direction, and the plurality of second filter regions is arranged in a fourth diagonal direction different from the third diagonal direction.

16. The image sensor according to claim 15, wherein the plurality of first filter regions and the plurality of second filter regions are arranged adjacently to each other in a vertical direction and a horizontal direction of the image sensor.

17. The image sensor according to claim 14, wherein the plurality of first filter regions is arranged adjacently to each other in a vertical direction of the image sensor, and the plurality of second filter regions is arranged adjacently to each other in the vertical direction of the image sensor, or

the plurality of first filter regions is arranged adjacently to each other in a horizontal direction of the image sensor, and the plurality of second filter regions is arranged adjacently to each other in the horizontal direction of the image sensor.

18. The image sensor according to any one of claims 1 to 17, wherein the processing circuit is configured to calculate an average value of the electrical signals generated by the pixels corresponding to the first color filters in each filter region as the first color signal, an average value of the electrical signals generated by the pixels corresponding to the second color filters in each filter region as the second color signal, and an average value of the electrical signals generated by the pixels corresponding to the third color filters in each filter region as the third color signal.

19. The image sensor according to any one of claims 1 to 18, wherein the processing circuit is configured to perform a gamma correction process on the first intermediate image.

20. The image sensor according to claims 1 to 19, wherein the processing circuit is configured to perform a white balance process, a color correction matrix process, and a gamma correction process on the first color signal, the second color signal, and the third color signal, and convert the processed first color signal, the processed second color signal, and the processed third color signal into a chrominance-luminance separation space to obtain the plurality of second intermediate images.

21. The image sensor according to claim 1 to 20, wherein the processing circuit is configured to perform an up-sampling process on the plurality of second intermediate images such that one filter region corresponds to a plurality of color values, so as to form a third intermediate image, and fuse the first intermediate image and the third intermediate image to obtain the first target image.

22. The image sensor according to claims 1 to 21, wherein the processing circuit is configured to perform a high-pass filtering process on the first intermediate image.

23. An imaging apparatus, comprising:

   an image sensor, comprising a filter array and a pixel array, the filter array comprising a plurality of filter regions each comprising a plurality of filter units, each filter unit comprising at least one first color filter, at least one second color filter, and at least one third color filter; the pixel array comprising a plurality of pixels each corresponding to one filter in the filter array and configured to receive light passing through the corresponding filter to generate an electrical signal; and the electrical signals generated by the pixels corresponding to each filter unit being combined for outputting as a combined luminance value and forming a first intermediate image, the combined luminance value representing luminance of light applied to the pixels corresponding to the filter unit; and
   a processor configured to:

      generate a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and
      process the first color signal, the second color signal, and the third color signal to obtain a plurality of second intermediate images representing chrominance values of the filter region, and fuse the first intermediate image and the plurality of second intermediate images to obtain a first target image.

24. The imaging apparatus according to claim 23, wherein a number of filter units in each filter region is M*M, where M is an integer greater than or equal to 2, and a number of filters in each filter unit is N*N, where N is an integer greater than or equal to 2.

25. The imaging apparatus according to claim 23 or 24, the plurality of filter units has a same ratio between a number of first color filters, a number of second color filters, and a number of the third color filters in each filter unit.

26. The imaging apparatus according to any one of claims 23 to 25, wherein each first color filter is a green filter, each second color filter is a red filter, and each third color filter is a blue filter.

27. The imaging apparatus according to any one of claims 23 to 26, wherein the filter array comprises a plurality of first sets of filters and a plurality of second sets of filters, each of the plurality of first sets of filters comprising a plurality of first color filters and a plurality of second color filters, a number of first color filters and a number of second color filters being same in each of the plurality of first sets of filters, and each of the plurality of second sets of filters comprising a plurality of first color filters and a plurality of third color filters, a number of first color filters and a number of third color filters being same in each of the plurality of second sets of filters,

a sub-array formed by arrangement of all the first sets of filters and all the second sets of filters is a part of the filter array, or a sub-array formed by arrangement of all the filter regions is a part of the filter array,
in a low-luminance mode, the imaging apparatus is configured to obtain the first target image;
in a clear texture mode, the processor is configured to:

combine the electrical signals generated by the pixels corresponding to each of the plurality of first sets of filters to generate a first pixel signal and a third pixel signal, the first pixel signal representing a value in the first color channel of the light applied to the pixels corresponding to the first set of filters, and the third pixel signal representing a value in the second color channel of light applied to the pixels corresponding to the first set of filters, and
combine the electrical signals generated by the pixels corresponding to each of the plurality of second sets of filters to generate a second pixel signal and a fourth pixel signal, the second pixel signal representing a value in the first color channel of light applied to the pixels corresponding to the second set of filters, and the fourth pixel signal representing a value in a third color channel of the light applied to the pixels corresponding to the second set of filters, and
obtain a second target image according to the first pixel signal, the second pixel signal, the third pixel signal, and the fourth pixel signal.

28. The imaging apparatus according to claim 27, wherein the plurality of first sets of filters is arranged in a first diagonal direction, and the plurality of second sets of filters is arranged in a second diagonal direction different from the first diagonal direction.

29. The imaging apparatus according to claim 28, wherein the plurality of first sets of filters and the plurality of second sets of filters are arranged adjacently to each other in a vertical direction and a horizontal direction of the image sensor.

30. The imaging apparatus according to any one of claims 27 to 29, wherein

in each of the plurality of first sets of filters, the plurality of first color filters and the plurality of second color filters are arranged adjacently to each other in the vertical direction and a horizontal direction of the image sensor, and
in each of the plurality of second sets of filters, the plurality of first color filters and the plurality of third color filters are arranged adjacently to each other in the vertical direction and the horizontal direction of the image sensor.

31. The imaging apparatus according to any one of claims 27 to 29, wherein

in each of the plurality of first sets of filters, the filters are arranged in rows and the filters in each row have a same color, or
in each of the plurality of first sets of filters, the filters are arranged in columns and the filters in each column have a same color,
in each of the plurality of second sets of filters, the filters are arranged in rows and the filters in each row have a same color, or
in each of the plurality of second sets of filters, the filters are arranged in columns and the filters in each column have a same color.

32. The imaging apparatus according to any one of claims 27 to 31, wherein the image sensor further comprises a microlens array, the microlens array comprising a plurality of sets of microlenses each corresponding to one set of filters and to the pixels corresponding to the one set of filters.

33. The imaging apparatus according to claim 32, wherein each of the plurality of sets of microlenses comprises a plurality of microlenses each corresponding to one filter and one pixel.

34. The imaging apparatus according to claim 32, wherein each of the plurality of sets of microlenses comprises one microlens corresponding to one set of filters and to the pixels corresponding to the one set of filters.

35. The imaging apparatus according to any one of claims 23 to 26, wherein each filter unit comprises two first color filters, one second color filter, and one third color filter, and the second color filter and the third color filter in each filter unit are not adjacent to each other, and in each filter region, the plurality of filter units has different arrangements of filters.

36. The imaging apparatus of claim 35, wherein the plurality of filter regions comprises a plurality of first filter regions and a plurality of second filter regions, each of the plurality of first filter regions has a different arrangement of filter units than each of the plurality of second filter regions.

37. The imaging apparatus according to claim 36, wherein the plurality of first filter regions is arranged in a third diagonal direction, and the plurality of second filter regions is arranged in a fourth diagonal direction different from the third diagonal direction.

38. The imaging apparatus according to claim 37, wherein the plurality of first filter regions and the plurality of second filter regions are arranged adjacently to each other in a vertical direction and a horizontal direction of the image sensor.

39. The imaging apparatus according to claim 36, wherein the plurality of first filter regions is arranged adjacently to each other in a vertical direction of the image sensor, and the plurality of second filter regions is arranged adjacently to each other in the vertical direction of the image sensor, or
the plurality of first filter regions is arranged adjacently to each other in a horizontal direction of the image sensor, and the plurality of second filter regions is arranged adjacently to each other in the horizontal direction of the image sensor.

40. The imaging apparatus according to any one of claims 23 to 39, wherein the processor is configured to calculate an average value of the electrical signals generated by the pixels corresponding to the first color filters in each filter region as the first color signal, an average value of the electrical signals generated by the pixels corresponding to the second color filters in each filter region as the second color signal, an average value of the electrical signals generated by the pixels corresponding to the third color filters in each filter region as the third color signal.

41. The imaging apparatus according to any one of claims 23 to 40, wherein the processor is configured to perform a gamma correction process on the first intermediate image.

42. The imaging apparatus according to claims 23 to 41, wherein the processor is configured to perform a white balance process, a color correction matrix process, and a gamma correction process on the first color signal, the second color signal, and the third color signal, and convert the processed first color signal, the processed second color signal, and the processed third color signal into a chrominance-luminance separation space to obtain the plurality of second intermediate images.

43. The imaging apparatus according to claims 23 to 42, wherein the processor is configured to perform an up-sampling process on the plurality of second intermediate images such that one filter region corresponds to a plurality of color values, so as to form a third intermediate image, and fuse the first intermediate image and the third intermediate image to obtain the first target image.

44. The imaging apparatus according to claims 23 to 43, wherein the processor is configured to perform a high-pass filtering process on the first intermediate image.

45. An electronic device, comprising:

an imaging apparatus, comprising an image sensor, the image sensor comprising a filter array and a pixel array, the filter array comprising a plurality of filter regions each comprising a plurality of filter units, each filter unit comprising at least one first color filter, at least one second color filter, and at least one third color filter; the pixel array comprising a plurality of pixels each corresponding to one filter in the filter array and configured to receive light passing through the corresponding filter to generate an electrical signal; and the electrical signals generated by the pixels corresponding to each filter unit being combined for outputting as a combined luminance value and forming a first intermediate image, the combined luminance value representing luminance of light applied to the pixels corresponding to the filter unit; and

a processor configured to:

generate a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and

process the first color signal, the second color signal, and the third color signal to obtain a plurality of second intermediate images representing chrominance values of the filter region, and fuse the first intermediate image and the plurality of second intermediate images to obtain a first target image.

46. An image processing system, comprising:

an electronic device, comprising an imaging apparatus, the imaging apparatus comprising a filter array and a pixel array, the filter array comprising a plurality of filter regions each comprising a plurality of filter units, each filter unit comprising at least one first color filter, at least one second color filter, and at least one third color filter; the pixel array comprising a plurality of pixels each corresponding to one filter in the filter array and configured to receive light passing through the corresponding filter to generate an electrical signal; and the electrical signals generated by the pixels corresponding to each filter unit being combined for outputting as a combined luminance value and forming a first intermediate image, the combined luminance value representing luminance of light applied to the pixels corresponding to the filter unit; and

a processor configured to:

generate a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region; and

process the first color signal, the second color signal, and the third color signal to obtain a plurality of second intermediate images representing chrominance values of the filter region, and fuse the first intermediate image and the plurality of second intermediate images to obtain a first target image.

47. The image processing system according to claim 46, wherein the processor is located in a server for cloud computing or a server for edge computing.

48. A signal processing method, applied in an image sensor, the imaging apparatus comprising a filter array and a pixel array, the filter array comprising a plurality of filter regions each comprising a plurality of filter units, each filter unit comprising at least one first color filter, at least one second color filter, and at least one third color filter; the pixel array comprising a plurality of pixels each corresponding to one filter in the filter array and configured to receive light passing through the corresponding filter to generate an electrical signal, the signal processing method comprising:

combining the electrical signals generated by the pixels corresponding to each filter unit for outputting as a combined luminance value and forming a first intermediate image, the combined luminance value representing luminance of light applied to the pixels corresponding to the filter unit;

generating a first color signal, a second color signal, and a third color signal based on the electrical signals generated by the pixels corresponding to each filter region, the first color signal representing a value in a first color channel of light applied to the pixels corresponding to the filter region, the second color signal representing a value in a second color channel of the light applied to the pixels corresponding to the filter region, and the third color signal representing a value in a third color channel of the light applied to the pixels corresponding to the filter region;

processing the first color signal, the second color signal, and the third color signal to obtain a plurality of second intermediate images representing chrominance values of the filter region; and

fusing the first intermediate image and the plurality of second intermediate images to obtain a first target image.

**49.** The signal processing method according to claim 48, wherein each filter unit comprises two first color filters, one second color filter, and one third color filter; one of the first color filters and the one second color filter in one filter unit and one of the first color filters and the one second color filter in another filter unit are combined into a first set of filters, and one of the first color filters and the one third color filter in one filter unit and one of the first color filters and the one third color filter in the other filter unit are combined into a second set of filters, and the filter array comprises a plurality of first sets of filters and a plurality of second sets of filters, the signal processing method comprising:

in a low-luminance mode, obtaining the first target image;
in a clear texture mode:

combining the electrical signals generated by the pixels corresponding to each of the plurality of first sets of filters to generate a first pixel signal and a third pixel signal, the first pixel signal representing a value in the first color channel of light applied to the pixels corresponding to the first set of filters, and the third pixel signal representing a value in the second color channel of the light applied to the pixels corresponding to the first set of filters, and
combining the electrical signals generated by the pixels corresponding to each of the plurality of second sets of filters to generate a second pixel signal and a fourth pixel signal, the second pixel signal representing a value in the first color channel of light applied to the pixels corresponding to the second set of filters, and the fourth pixel signal representing a value in a third color channel of the light applied to the pixels corresponding to the second set of filters, and
obtaining a second target image according to the first pixel signal, the second pixel signal, the third pixel signal, and the fourth pixel signal.

**50.** The signal processing method according to claim 48 or 49, wherein said generating the first color signal, the second color signal, and the third color signal based on the electrical signals generated by the pixels corresponding to each filter region comprises:

calculating an average value of the electrical signals generated by the pixels corresponding to the first color filters in each filter region as the first color signal;
calculating an average value of the electrical signals generated by the pixels corresponding to the second color filters in each filter region as the second color signal; and
calculating an average value of the electrical signals generated by the pixels corresponding to the third color filters in each filter region as the third color signal.

**51.** The signal processing method according to any one of claims 48 to 50, comprising:
performing a gamma correction process on the first intermediate image.

**52.** The signal processing method according to claims 48 to 51, comprising:

performing a white balance process, a color correction matrix process, and a gamma correction process on the first color signal, the second color signal, and the third color signal,
wherein said processing the first color signal, the second color signal, and the third color signal to obtain the plurality of second intermediate images representing chrominance values of the filter region comprises: converting the processed first color signal, the processed second color signal, and the processed third color signal into a chrominance-luminance separation space to obtain the plurality of second intermediate images.

**53.** The signal processing method according to claims 48 to 52, wherein said fusing the first intermediate image and the plurality of second intermediate images to obtain the first target image comprises:

performing an up-sampling process on the plurality of second intermediate images such that one filter region corresponds to a plurality of color values, so as to form a third intermediate image, and
fusing the first intermediate image and the third intermediate image to obtain the first target image.

**54.** The signal processing method according to claims 48 to 53, comprising:
performing a high-pass filtering process on the first intermediate image.

10

Image Processor

Filter Array — 11

Pixel Array — 12

Substrate — 14

Processing Circuit — 13

FIG. 1

FIG. 2

FIG. 3

FIG. 4

FIG. 5

FIG. 6

FIG. 7

FIG. 8

FIG. 9

FIG. 10

FIG. 11

A

B

C

FIG. 12

FIG. 13

FIG. 14

FIG. 15

A

B

C

L

FIG. 16

A

A

FIG. 17

FIG. 18

C

C

FIG. 19

FIG. 20

FIG. 21

1000

Electronic
Device
Imaging
Apparatus — 100

Image Sensor — 10

Processor — 20

FIG. 22

10000

Image Processing System

Electronic Device — 1000

Imaging Apparatus — 100

Image Sensor — 10

Processor — 20

FIG. 23

Combine the electrical signals generated by the pixels corresponding to each filter unit for outputting as a combined luminance value and forming a first intermediate image

01

Generate a first color signal, a second color signal, and a third color signal based on the electrical signals generated by the pixels corresponding to each filter region

02

Process the first color signal, the second color signal, and the third color signal to obtain a plurality of second intermediate images representing chrominance values of the filter region

03

Fuse the first intermediate image and the plurality of second intermediate images to obtain a first target image

04

FIG. 24

FIG. 25

| | INTERNATIONAL SEARCH REPORT | International application No. |
|---|---|---|
| | | **PCT/CN2020/078212** |

**A. CLASSIFICATION OF SUBJECT MATTER**

H04N 9/07(2006.01)i; H04N 5/225(2006.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 图像传感器, 滤光片, 颜色, 红色, 绿色, 蓝色, 电信号, 亮度, 合并, 颜色通道, 像素, image sensor, filter, color, colour, red, blue, green, signal, light, combine, channel, pixel

**C. DOCUMENTS CONSIDERED TO BE RELEVANT**

| Category* | Citation of document, with indication, where appropriate, of the relevant passages | Relevant to claim No. |
|---|---|---|
| Y | CN 105430360 A (GUANGDONG OPPO MOBILE TELECOMMUNICATIONS CORP., LTD.) 23 March 2016 (2016-03-23) description, paragraphs 37-65, 79, 89, figures 3-8 | 1-54 |
| Y | CN 106456272 A (INTUITIVE SURGICAL, INC.) 22 February 2017 (2017-02-22) description, paragraph 10 | 1-54 |
| Y | CN 105430359 A (GUANGDONG OPPO MOBILE TELECOMMUNICATIONS CORP., LTD.) 23 March 2016 (2016-03-23) description, paragraphs 3-65 | 1-54 |
| Y | CN 101106641 A (SAMSUNG ELECTRO-MECHANICS CO., LTD.) 16 January 2008 (2008-01-16) description, pages 4, 10-13 | 1, 23, 45, 46, 48 |
| A | CN 102857708 A (BEIJING RUILAN UNITED COMMUNICATION TECHNOLOGY CO., LTD.) 02 January 2013 (2013-01-02) entire document | 1-54 |
| A | US 2009200451 A1 (MICRON TECHNOLOGY INC.) 13 August 2009 (2009-08-13) entire document | 1-54 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2020** | **29 October 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

| | | | | | | | |
|---|---|---|---|---|---|---|---|
| International application No. | | | | | | | |
| | | | | **PCT/CN2020/078212** | | | |

| Patent document cited in search report | | | Publication date (day/month/year) | Patent family member(s) | | | Publication date (day/month/year) |
|---|---|---|---|---|---|---|---|
| CN | 105430360 | A | 23 March 2016 | CN | 105430360 | B | 23 January 2018 |
| CN | 106456272 | A | 22 February 2017 | JP | 2020061743 | A | 16 April 2020 |
| | | | | JP | 2017511176 | A | 20 April 2017 |
| | | | | EP | 3119321 | A1 | 25 January 2017 |
| | | | | US | 2017112354 | A1 | 27 April 2017 |
| | | | | CN | 111281311 | A | 16 June 2020 |
| | | | | WO | 2015142800 | A1 | 24 September 2015 |
| | | | | KR | 20160133520 | A | 22 November 2016 |
| | | | | US | 10506914 | B2 | 17 December 2019 |
| | | | | CN | 106456272 | B | 31 March 2020 |
| | | | | US | 2020077870 | A1 | 12 March 2020 |
| CN | 105430359 | A | 23 March 2016 | CN | 105430359 | B | 10 July 2018 |
| CN | 101106641 | A | 16 January 2008 | KR | 20070122347 | A | 31 December 2007 |
| | | | | EP | 1873713 | A2 | 02 January 2008 |
| | | | | US | 2008030596 | A1 | 07 February 2008 |
| | | | | EP | 1873713 | A3 | 20 January 2010 |
| | | | | JP | 2008011532 | A | 17 January 2008 |
| | | | | CN | 101106641 | B | 08 September 2010 |
| | | | | KR | 100827242 | B1 | 07 May 2008 |
| CN | 102857708 | A | 02 January 2013 | CN | 102857708 | B | 02 March 2016 |
| | | | | CN | 102510450 | A | 20 June 2012 |
| US | 2009200451 | A1 | 13 August 2009 | US | 7745779 | B2 | 29 June 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020078212 W